# EUROPEAN PATENT APPLICATION

(11) **EP 4 751 921 A1**
(43) Date of publication of application: **03.06.2026**
(21) Application number: 25219041.8
(22) Date of filing: 27.11.2025
(51) Int. Cl.: B41J 3/407, B41J 11/00, B41J 15/04, C09J 1/00, C09J 5/06

(54) **PRINTING APPARATUS AND CONTROL METHOD OF PRINTING APPARATUS**

(30) Priority: 27.11.2024 JP 2024206523
(71) Applicant: Seiko Epson Corporation, Tokyo 160-8801 (JP)
(72) Inventor: KOMATSU, Harunobu, Suwa-shi, 392-8502 (JP); YAMAZAKI, Soichi, Suwa-shi, 392-8502 (JP); KITADA, Kenji, Suwa-shi, 392-8502 (JP); TAKANO, Akihiko, Suwa-shi, 392-8502 (JP)
(74) Representative: Lewis Silkin LLP

(57) **Abstract**

A printing apparatus includes an endless transport belt configured to transport a recording medium, a drive unit configured to circulate and rotate the transport belt, a heating unit, a printing unit configured to perform printing on the recording medium, and a control unit, in which the control unit is selectable between a first mode where an aqueous pressure-sensitive adhesive applied to the transport belt is heated by the heating unit to form a pressure-sensitive adhesive layer at the transport belt in a state where the transport belt is being circulated and rotated without holding the recording medium, and a second mode where the pressure-sensitive adhesive layer is heated by the heating unit and printing is performed by the printing unit on the recording medium held by the transport belt in a state where the transport belt is being circulated and rotated.

## Description

The present application is based on, and claims priority from JP Application Serial Number 2024-206523, filed November 27, 2024, the disclosure of which is hereby incorporated by reference herein in its entirety.

### BACKGROUND

### 1. Technical Field

The present disclosure relates to a printing apparatus and a control method of the printing apparatus.

### 2. Related Art

For example, as disclosed in JP-A-2020-200120, a printing apparatus for applying ink to a recording medium that is being transported by a transport belt to print a predetermined image pattern is known.

A pressure-sensitive adhesive is applied to a surface of the transport belt. The recording medium adheres to a pressure-sensitive adhesive layer obtained by drying the pressure-sensitive adhesive such that the transport belt can transport the recording medium while holding the recording medium. As the pressure-sensitive adhesive to be applied to the transport belt, A pressure-sensitive adhesive formed of an organic solvent is generally used. Therefore, it is necessary to give much consideration to handling of the pressure-sensitive adhesive during manufacturing or application to the transport belt. In particular, during the application of the pressure-sensitive adhesive, there are various restrictions. For example, sufficient ventilation needs to be performed, the application needs to be performed within a short period of time, or the composition or addition amount of the organic solvent to be used is limited. Accordingly, it is also considered to use an aqueous pressure-sensitive adhesive.

Incidentally, the pressure-sensitive adhesive formed of the organic solvent cannot be heated due to its combustibility, but is advantageous in that it can be rapidly naturally dried to form a pressure-sensitive adhesive layer due to its high volatility. On the other hand, the aqueous pressure-sensitive adhesive has lower volatility than the pressure-sensitive adhesive formed of the organic solvent. Therefore, a substantial amount of time is required to naturally dry the aqueous pressure-sensitive adhesive applied to the surface of the transport belt to form a pressure-sensitive adhesive layer. However, when a mechanism for drying the aqueous pressure-sensitive adhesive is newly provided in a printing apparatus, there is a problem in that the structure of the printing apparatus is complicated.

### SUMMARY

According to an application example of the present disclosure, there is provided a printing apparatus that performs printing on a recording medium while holding the recording medium using a pressure-sensitive adhesive layer formed of an aqueous pressure-sensitive adhesive containing water and a resin, the printing apparatus including
an endless transport belt configured to transport the recording medium,
a drive unit configured to circulate and rotate the transport belt,
a heating unit provided around the transport belt,
a printing unit configured to perform printing on the recording medium that is being transported by the transport belt, and
a control unit configured to control operations of the drive unit, the heating unit, and the printing unit, in which
the control unit is selectable between
a first mode where the aqueous pressure-sensitive adhesive applied to the transport belt is heated by the heating unit to form the pressure-sensitive adhesive layer at the transport belt in a state where the transport belt is being circulated and rotated without holding the recording medium, and
a second mode where the pressure-sensitive adhesive layer is heated by the heating unit and printing is performed by the printing unit on the recording medium held by the transport belt in a state where the transport belt is being circulated and rotated.

According to another application example of the present disclosure, there is provided a control method of a printing apparatus including
an endless transport belt configured to transport a recording medium,
a drive unit configured to circulate and rotate the transport belt,
a heating unit provided around the transport belt, and
a printing unit configured to perform printing on the recording medium that is being transported by the transport belt,
the control method including
causing the heating unit to heat an aqueous pressure-sensitive adhesive applied to the transport belt to form a pressure-sensitive adhesive layer at the transport belt in a state where the transport belt is being circulated and rotated without holding the recording medium, and
causing the heating unit to heat the pressure-sensitive adhesive layer and causing the printing unit to perform printing on the recording medium held by the transport belt in a state where the transport belt is being circulated and rotated.

### BRIEF DESCRIPTION OF THE DRAWINGS

FIG. 1 is a schematic configuration diagram illustrating a printing apparatus according to a first embodiment.
FIG. 2 is a diagram illustrating a state where an application liquid of an aqueous pressure-sensitive adhesive is applied to a transport belt of the printing apparatus illustrated in FIG. 1 and a coating film is heated.
FIG. 3 is a flowchart illustrating a control method of the printing apparatus illustrated in FIG. 1.
FIG. 4 is a diagram illustrating a state where a coating film on a transport belt of a printing apparatus according to a second embodiment is heated.

### DESCRIPTION OF EMBODIMENTS

Hereinafter, embodiments of the present disclosure will be described with reference to the drawings. The following description does not limit the technical range or the meaning of the terms described in the claims. In addition, the dimensional ratios of the drawings are exaggerated for convenience of description and may be different from the actual ratios.

### First Embodiment

First, a printing apparatus 100 according to a first embodiment will be described.

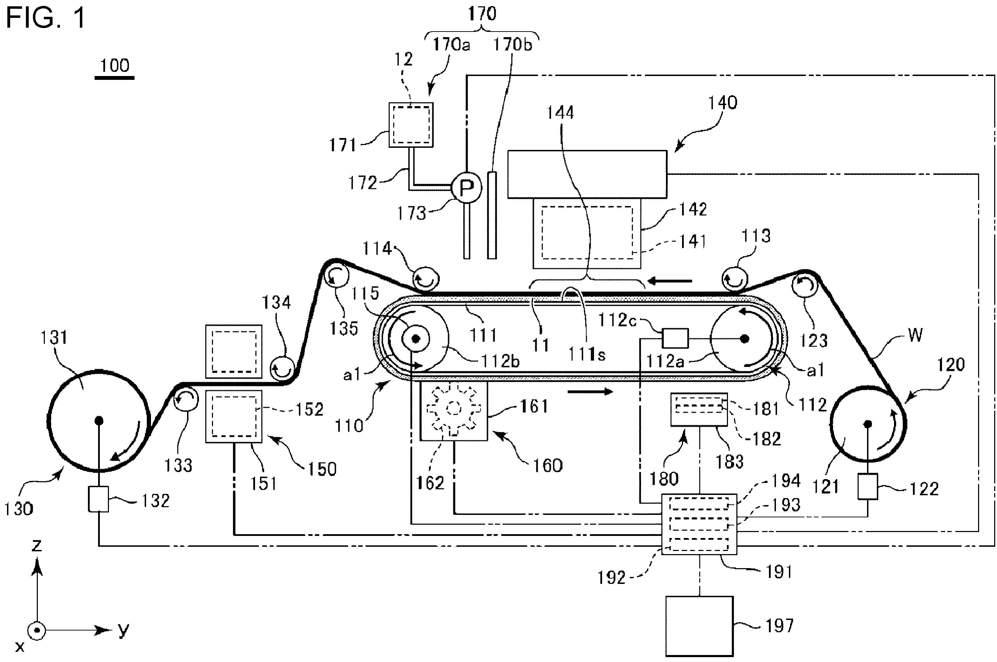

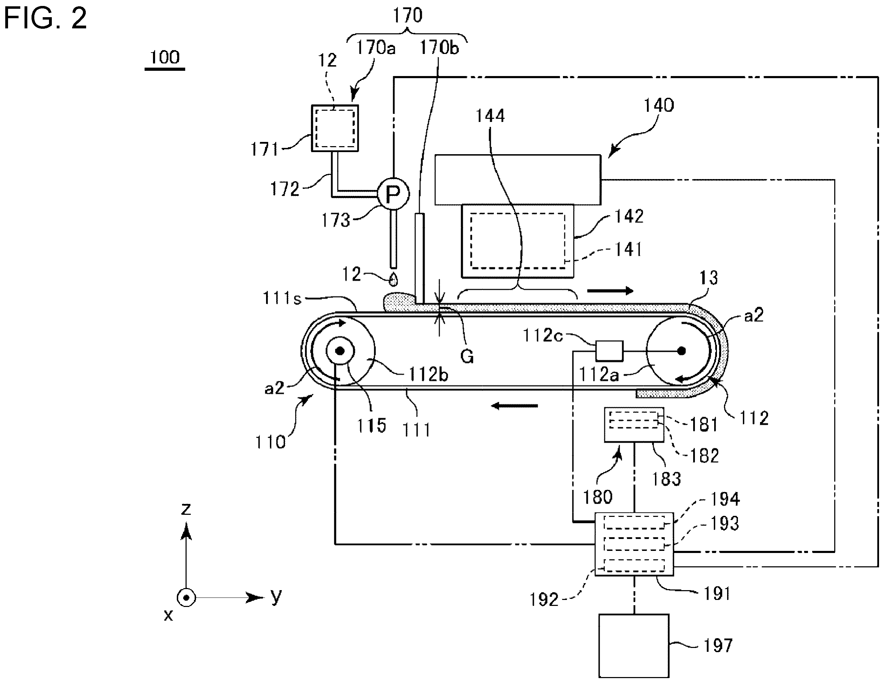

FIG. 1 is a schematic configuration diagram illustrating the printing apparatus 100 according to the present embodiment. FIG. 2 is a diagram illustrating a state where an application liquid 12 of an aqueous pressure-sensitive adhesive is applied to a transport belt 111 of the printing apparatus 100 illustrated in FIG. 1 and a coating film 13 is heated.

Hereinafter, for convenience of description, FIGS. 1 and 2 illustrate an x-axis, a y-axis, and a z-axis as three axes orthogonal to each other. The x-axis is an axis along one direction (width direction of the transport belt 111) in the horizontal direction, the y-axis is an axis along a direction (traveling direction of a portion where a recording medium W is held in the transport belt 111) in the horizontal direction perpendicular to the x-axis, and the z-axis is an axis along the vertical direction (up-down direction in the drawing). In addition, the tip side of each arrow illustrated in the drawing is referred to as a "positive side (+ side)", and the base side is referred to as a "negative side (- side)". In addition, the + side of the z-axis direction is referred to as "upper" or "upward", and the - side of the z-axis direction is referred to as "lower" or "downward".

The printing apparatus 100 according to the present embodiment will be briefly described with reference to FIG. 1. In the printing apparatus 100, a pressure-sensitive adhesive layer 11 is formed at the transport belt 111 using an aqueous pressure-sensitive adhesive containing water and a resin, and the recording medium W adheres to the pressure-sensitive adhesive layer 11. As a result, by circulating and rotating the transport belt 111 while holding the recording medium W with the transport belt 111, the recording medium W is transported, and printing is performed on the recording medium W that is being transported.

The printing apparatus 100 includes a transport device 110 including the transport belt 111 that transports the recording medium W, an uncoiling device (uncoiler) 120 that uncoils the elongated non-printed recording medium W coiled in a roll shape, and a coiling device (coiler) 130 that coils the printed recording medium W. The printing apparatus 100 further includes a printing unit 140 that applies ink to the recording medium W being transported by the transport belt 111 to print a desired image pattern, an ink drying unit 150 that dries the ink on the recording medium W, and a cleaning unit 160 that cleans the pressure-sensitive adhesive layer 11 from which the recording medium W is separated.

By using the pressure-sensitive adhesive layer 11 multiple times or cleaning the pressure-sensitive adhesive layer 11 multiple times, the adhesive force of the pressure-sensitive adhesive layer 11 tends to gradually decrease. Accordingly, in the printing apparatus 100, the old pressure-sensitive adhesive layer 11 that is used multiple times on the transport belt 111 is removed, and the aqueous pressure-sensitive adhesive is applied to the transport belt 111 to form a new pressure-sensitive adhesive layer 11. In order to form the pressure-sensitive adhesive layer 11, the printing apparatus 100 further includes an application liquid supply unit 170 that supplies the application liquid 12 of the aqueous pressure-sensitive adhesive to the transport belt 111 as illustrated in FIG. 2. The application liquid supply unit 170 includes an application liquid supply source 170a that applies the application liquid 12 to the transport belt 111, and a blade 170b that smoothes the application liquid 12 applied to the transport belt 111 to a desired thickness. Hereinafter, the film of the aqueous pressure-sensitive adhesive on the transport belt 111 formed by smoothing the application liquid 12 with the blade 170b is also referred to as "coating film 13".

The printing apparatus 100 further includes a heating unit 180 that is disposed around the transport belt 111, a control unit 191 that controls the operation of each of the units of the printing apparatus 100, and an operation unit 197 that receives an operation of a user. The heating unit 180 also functions for heating for drying the coating film 13 on the transport belt 111 as illustrated in FIG. 2 and heating for increasing the adhesive force of the pressure-sensitive adhesive layer 11 before the recording medium W adheres to the pressure-sensitive adhesive layer 11 as illustrated in FIG. 1.

Hereinafter, the recording medium W, each of the units of the printing apparatus 100, and the aqueous pressure-sensitive adhesive will be described in detail. In the present embodiment, a transport direction in which the recording medium W is transported is the y-axis direction. Hereinafter, a state where the coating film 13 on the transport belt 111 is dried to form the pressure-sensitive adhesive layer 11 is also referred to as "first mode", and a state where printing is performed on the recording medium W is referred to as "second mode".

In order to easily understand the description, in FIGS. 1 and 2, a range where the pressure-sensitive adhesive layer 11, the application liquid 12, and the coating film 13 are provided is indicated by hatching. In order to easily understand the description, the thicknesses of the pressure-sensitive adhesive layer 11 and the coating film 13 are illustrated to be more than the thickness of the transport belt 111. However, a magnitude relationship between these thicknesses is not limited to the relationship illustrated in the drawing. In FIG. 2, the uncoiling device 120, the coiling device 130, the ink drying unit 150, and the cleaning unit 160 are not illustrated. In addition, in FIG. 2, tensioners 113 and 114 described below are at positions away from the transport belt 111 but are not illustrated.

First, the recording medium W will be described.

As the recording medium W, a textile-printed material can be used. The textile-printed material refers to fabric (textile), clothing, and other clothing products as targets of textile printing. The fabric includes woven fabric, knitted fabric, nonwoven fabric, or the like of natural fibers such as cotton, silk, or wool, chemical fibers such as polyester or nylon, or a composite fiber obtained by mixing these. In addition, the clothing and other clothing products include sewn T-shirts, handkerchiefs, scarves, towels, shopping bags, cloth bags, furniture such as curtains, sheets, and bed covers, as well as fabrics before and after cutting existing as a part in a state before sewing.

The recording medium W is not limited to the above-described textile-printed material, and other examples thereof include dedicated paper for ink jet recording such as plain paper, high-quality paper, or glossy paper. In addition, as the recording medium W, for example, a plastic film that is not surface-treated for ink jet printing, that is, does not include an ink-absorbing layer, a base such as paper that is not coated with plastic, or a base to which a plastic film is bonded can be used. The plastic is not particularly limited, and examples thereof include polyvinyl chloride, polyethylene terephthalate, polycarbonate, polystyrene, polyurethane, polyethylene, and polypropylene.

Next, the transport device 110 of the printing apparatus 100 will be described.

As illustrated in FIG. 1, the transport device 110 includes the transport belt 111, a drive unit 112 that circulates and rotates the transport belt 111, and the tensioners 113 and 114 that apply tension to the recording medium W being transported by the transport belt 111. The drive unit 112 includes a drive roller 112a and a driven roller 112b that are disposed away from each other in the y-axis direction, and a motor 112c that rotates the drive roller 112a.

The transport belt 111 is an endless belt. The transport belt 111 is stretched between the drive roller 112a and the driven roller 112b. The transport belt 111 has flexibility.

A constituent material of the transport belt 111 is not particularly limited, and examples thereof include various resin materials, various rubber materials, fabric, and resin materials or rubber materials where a reinforcing member such as a fiber material is embedded.

The pressure-sensitive adhesive layer 11 is formed at a pressure-sensitive adhesive layer formation surface 111s that is an outer peripheral surface of the transport belt 111 (also simply referred to as "at the transport belt 111"). The pressure-sensitive adhesive layer formation surface 111s of the transport belt 111 may be a smooth surface but is preferably a rough surface having a certain roughness to improve the adhesion with the pressure-sensitive adhesive layer 11 to be formed. Therefore, roughening may be performed on the pressure-sensitive adhesive layer formation surface 111s. In addition, for the same purpose, a predetermined chemical treatment may be performed on the pressure-sensitive adhesive layer formation surface 111s. Further, a pressure-sensitive adhesive layer-forming layer (not illustrated) for obtaining the ideal pressure-sensitive adhesive layer formation surface 111s may be provided on the outer peripheral surface of the transport belt 111. In this case, an outer peripheral surface of the pressure-sensitive adhesive layer-forming layer is the pressure-sensitive adhesive layer formation surface 111s.

Each of the drive roller 112a and the driven roller 112b extends along the x-axis direction. In the present embodiment, the drive roller 112a and the driven roller 112b have substantially the same diameter. Here, the diameter of the drive roller and the diameter of the driven roller may be different from each other.

The drive roller 112a rotates due to the operation of the motor 112c. The driven roller 112b is disposed on the - side in the y-axis direction further than the drive roller 112a. The rotating force of the drive roller 112a is transmitted to the driven roller 112b through the transport belt 111, and the driven roller 112b rotates in conjunction with the drive roller 112a.

The motor 112c can rotate forward and backward. As a result, the drive unit 112 can switch the rotation direction of the transport belt 111 for the rotation between the state (second mode) where printing is performed on the recording medium W and the state (first mode) where the pressure-sensitive adhesive layer 11 is formed at the transport belt 111.

Specifically, in the second mode, as illustrated in FIG. 1, the drive roller 112a and the driven roller 112b rotate about an axis parallel to the x-axis as a central axis in a first direction a1 (in FIG. 1, counterclockwise). Therefore, the transport belt 111 circulates and rotates toward the - side in the y-axis direction at a position above the drive roller 112a and the driven roller 112b and toward the + side in the y-axis direction at a position below the drive roller 112a and the driven roller 112b.

The recording medium W uncoiled from the uncoiling device 120 is held by a portion of the transport belt 111 positioned above the drive roller 112a and the driven roller 112b, and is transported toward the - side in the y-axis direction. During this transport, the printing unit 140 prints a desired image pattern on the recording medium W.

In addition, in the first mode, as illustrated in FIG. 2, the drive roller 112a and the driven roller 112b rotate about the axis parallel to the x-axis as a central axis in a second direction a2 (in FIG. 2, clockwise) opposite to the first direction a1. Therefore, the transport belt 111 circulates and rotates together with the coating film 13 toward the + side in the y-axis direction at a position above the drive roller 112a and the driven roller 112b and toward the - side in the y-axis direction at a position below the drive roller 112a and the driven roller 112b.

In the driven roller 112b, a rotation detection unit 115 that detects the rotation direction and the rotation amount of the driven roller 112b is provided. The rotation detection unit 115 is not particularly limited, and examples thereof include an optical or magnetic rotary encoder. The control unit 191 acquires information regarding the rotation direction and the rotation amount of the driven roller 112b from the rotation detection unit 115. The control unit 191 can understand the rotation direction, the rotating speed (transport speed), and the like of the circulation rotation of the transport belt 111 based on the acquired information, and performs a drive control of the transport belt 111 in each of the first mode and the second mode. The installation position of the rotation detection unit is not limited to the above description. For example, the rotation detection unit may be provided in the drive roller. In addition, the rotation detection unit does not need to be provided in the printing apparatus.

As described above, in the printing apparatus 100, the rotation direction of the transport belt 111 varies between the first mode and the second mode. Here, the rotation direction of the transport belt may be the same between the state where printing is performed on the recording medium and the state where the pressure-sensitive adhesive layer is formed at the transport belt.

As illustrated in FIG. 1, each of the tensioners 113 and 114 has a roller shape. As in the drive roller 112a and the driven roller 112b, the tensioners 113 and 114 are disposed away from each other in the y-axis direction, and extend along the x-axis direction, respectively. The tensioners 113 and 114 move in the z-axis direction using a movement mechanism (not illustrated), and are configured to move toward and away from the transport belt 111. Examples of the movement mechanism include a drive source such as an air cylinder, an oil cylinder, or a solenoid.

In the second mode, the recording medium W is interposed together with the transport belt 111 between the tensioner 113 and the drive roller 112a, and the recording medium W is interposed together with the transport belt 111 between the tensioner 114 and the driven roller 112b. Outer peripheral surfaces of the tensioners 113 and 114 come into contact with the recording medium W such that the recording medium W is transported to the - side of the y-axis direction and rotate clockwise in FIG. 1. As a result, the recording medium W to which appropriate tension is applied is held by the transport belt 111 and transported in a state where the tension is applied. As a result, the occurrence of wrinkles, sagging, or the like in the recording medium W that is being transported is reduced. As a result, when printing is performed on the recording medium W, the printing is performed appropriately with high quality. The tensioners 113 and 114 may actively rotate or may be driven to rotate.

As described above, although not illustrated in FIG. 2, in the first mode, the tensioners 113 and 114 are disposed at standby positions upwardly away from the transport belt 111.

Next, the uncoiling device 120 will be described.

As illustrated in FIG. 1, the uncoiling device 120 is disposed upstream of the transport device 110 in the transport direction of the recording medium W, that is, on the + side in the y-axis direction. The uncoiling device 120 includes an uncoiling roller (uncoiling reel) 121 that has the non-printed recording medium W coiled in a roll shape and has a function of sending out the recording medium W, a motor 122 that rotates the uncoiling roller 121, and a roller-shaped tensioner 123 that applies tension to the recording medium W between the uncoiling roller 121 and the transport device 110.

The motor 122 rotates the uncoiling roller 121 counterclockwise in FIG. 1. The recording medium W passes through a region above the tensioner 123, and passes through a region below the tensioner 113. A position in the z-axis direction of an upper end of the tensioner 123 is above a position in the z-axis direction of a portion of the pressure-sensitive adhesive layer 11 above the drive roller 112a and the driven roller 112b. Therefore, the recording medium W uncoiled from the uncoiling roller 121 moves obliquely downward at the position of the tensioner 123, and adheres to the pressure-sensitive adhesive layer 11 on the transport belt 111 at the position of the tensioner 113.

Here, the configuration of the uncoiling device is not limited to the above description as long as the recording medium is uncoiled. For example, the tensioner does not need to be provided in the uncoiling device, the number of tensioners provided in the uncoiling device may be two or more, and the arrangement thereof is not particularly limited. In addition, the rotation direction of the uncoiling roller is not limited to the above-described direction.

Next, the coiling device 130 will be described.

The coiling device 130 is disposed downstream of the transport device 110 in the transport direction of the recording medium W (- side in the y-axis direction). The coiling device 130 includes a coiling roller 131 that coils the recording medium W in a roll shape, a motor 132 that rotates the coiling roller, and roller-shaped tensioners 133, 134, and 135 that apply tension to the recording medium W between the coiling roller 131 and the transport device 110.

The motor 132 rotates the coiling roller 131 clockwise in FIG. 1. The tensioners 133, 134, and 135 are disposed in this order at a predetermined interval in a direction away from the coiling roller 131 (direction toward the upstream). The recording medium W passes through a region below the tensioner 114, and passes through a region above the tensioner 135. A position in the z-axis direction of an upper end of the tensioner 135 is above a position in the z-axis direction of a portion of the pressure-sensitive adhesive layer 11 above the drive roller 112a and the driven roller 112b. Next, the recording medium W after printing moves obliquely upward at the position of the tensioner 114, and is separated from the pressure-sensitive adhesive layer 11 and the transport belt 111.

Here, the configuration of the coiling device is not limited to the above description as long as the recording medium is coiled. For example, the tensioner does not need to be provided in the coiling device, the number of tensioners provided in the coiling device may be one, two, or four or more, and the arrangement thereof is not particularly limited. In addition, the rotation direction of the coiling roller is not limited to the above-described direction.

Next, the printing unit 140 will be described.

The printing unit 140 includes a carriage unit 142 including a plurality of ink jet heads 141 that discharge ink toward the recording medium W, and an x-axis table (not illustrated) that movably supports the carriage unit 142 in the x-axis direction.

Each of the ink jet heads 141 includes, for example, a head main body in which an internal flow path filled with ink is formed and a large number of nozzle groups having openings. The head main body is provided with a piezoelectric element (piezoelectric body) corresponding to each discharge nozzle, and when a voltage is applied to the piezoelectric element, ink is discharged from the nozzle group as droplets.

The inks include, for example, four colors of cyan (C), magenta (M), yellow (Y), and black (K) containing a dye or a pigment as a coloring agent in water as a solvent. The respective color inks are independently discharged from the ink jet heads 141, respectively.

In the state (second mode) where printing is performed on the recording medium W, the carriage unit 142 is disposed above a portion of the recording medium W that is held by the transport belt 111. The uncoiling device 120 intermittently sends out the recording medium W in the holding state where the uncoiled recording medium W is held by the transport belt 111. At this time, the printing unit 140 discharges ink from the nozzle group to the recording medium W in the holding state in a state of reciprocating the carriage unit 142 in the x-axis direction. As a result, a desired image pattern is formed at the recording medium W to perform printing. The image pattern may be obtained by multi-color printing or may be obtained by monochrome printing.

This way, a printing region 144 is formed between the printing unit 140 and the transport belt 111. More specifically, the printing region 144 is positioned between a lower portion of the carriage unit 142 and a region of an outer peripheral surface of the pressure-sensitive adhesive layer 11 positioned between the tensioner 113 and the tensioner 114.

In a state where printing is not performed on the recording medium W, for example, in the state (first mode) where the pressure-sensitive adhesive layer 11 is formed, the carriage unit 142 stands by at a standby position that is a position deviating from the recording medium W (transport belt 111) in the x-axis direction when seen from the z-axis direction.

Here, the configuration of the printing unit is not limited to the above description as long as printing can be performed on the recording medium. For example, the ink jet head may be a piezoelectric type or a thermal type. In addition, the printing unit may be a unit where the ink jet head is not used, for example, a transfer type printing unit.

Next, the ink drying unit 150 will be described.

The ink drying unit 150 is disposed downstream of the printing unit 140 in the transport direction of the recording medium W (- side of the y-axis direction) and between the transport device 110 and the coiling roller 131 of the coiling device 130. The ink drying unit 150 includes a chamber 151 and a coil 152 which is a heat source (heater) disposed in the chamber 151. The coil 152 is configured with a heating element such as a nichrome wire that generates heat by being supplied with power. Due to heat generated from the coil 152, the ink on the recording medium W passing through the inside of the chamber 151 can be dried.

Here, the configuration of the ink drying unit is not limited to the above description as long as the ink on the recording medium can be dried. For example, the ink drying unit may be configured with another heater such as a sheath heater, a cartridge heater, or an infrared heater. In addition, the ink drying unit does not need to be provided in the printing apparatus.

Next, the cleaning unit 160 will be described.

The cleaning unit 160 is disposed below the transport belt 111 and the driven roller 112b. The cleaning unit 160 includes a storage tank 161 that stores a cleaning liquid and a cleaning brush 162 that is disposed in the storage tank 161. The cleaning brush 162 is configured to rotate using a motor (not illustrated). The cleaning unit 160 moves in the z-axis direction using a movement mechanism (not illustrated), and is configured to move toward and away from the transport belt 111. Examples of the movement mechanism include a drive source such as an air cylinder, an oil cylinder, or a solenoid.

In the state (second mode) where printing is performed on the recording medium W, the cleaning unit 160 is disposed at a position where the cleaning brush 162 comes into contact with the pressure-sensitive adhesive layer 11 on the transport belt 111. By rotating the cleaning brush 162, the cleaning liquid is applied to the surface of the pressure-sensitive adhesive layer 11 from which the recording medium W is separated, and the pressure-sensitive adhesive layer 11 is brushed. As a result, foreign matter such as an ink composition or fiber of the recording medium W attached to the pressure-sensitive adhesive layer 11 is removed.

In the state (first mode) where the pressure-sensitive adhesive layer 11 is formed, the cleaning unit 160 is in an inoperative state. That is, the cleaning unit 160 stops the rotation of the cleaning brush 162, and is disposed at a standby position away from the transport belt 111 and the coating film 13.

Here, the configuration of the cleaning unit is not limited to the above description as long as the pressure-sensitive adhesive layer can be cleaned as necessary. For example, the cleaning unit may be configured to eject the cleaning liquid from the nozzle to the pressure-sensitive adhesive layer due to the operation of a pump to clean the pressure-sensitive adhesive layer. The cleaning unit may be configured to remove foreign matter by causing a blade or a brush to slide on the pressure-sensitive adhesive layer. In addition, the cleaning unit does not need to be provided in the printing apparatus.

Next, the aqueous pressure-sensitive adhesive forming the application liquid 12 will be described.

The aqueous pressure-sensitive adhesive is an aqueous pressure-sensitive adhesive composition containing a resin and water. Hereinafter, a constituent material and physical properties of the aqueous pressure-sensitive adhesive will be described in detail.

### Resin

The resin is not particularly limited, and, for example, a (meth)acrylic resin can be used.

By containing the (meth)acrylic resin, the adhesive force and durability of the pressure-sensitive adhesive layer 11 can be improved. The (meth)acrylic resin may be a water-soluble resin or may be an emulsion dispersed in an aqueous solvent. The water-soluble resin and the resin emulsion will also be generically referred to as the (meth)acrylic resin in the present embodiment. By using the (meth)acrylic resin, the environmental burden by an organic solvent can be reduced, and the exfoliating property of the recording medium W, in particular, textile in the pressure-sensitive adhesive layer 11 also tends to be further improved.

The (meth)acrylic resin is not particularly limited as long as it is a polymer obtained by polymerization of a (meth)acrylic monomer such as (meth)acrylic acid or a (meth)acrylic acid ester as one component, and examples of the (meth)acrylic resin include a homopolymer obtained from a (meth)acrylic monomer and a copolymer of a (meth)acrylic monomer and another monomer. More specifically, the (meth)acrylic monomer is not particularly limited, and examples thereof include: a (meth)acrylic monomer having an aliphatic group having 3 or less carbon atoms such as methyl methacrylate (MMA), ethyl methacrylate (EMA), or n-propyl methacrylate (PMA); a (meth)acrylic monomer having an aliphatic group having 4 or more carbon atoms such as butyl methacrylate (BMA), butyl acrylate (BA), or 2-ethylhexyl acrylate (2EHA); and a (meth)acrylic monomer having an aromatic group such as styrene (St). The other monomers are not particularly limited, and examples thereof include acrylamide and acrylonitrile.

The monomer in the (meth)acrylic resin is not particularly limited, but examples thereof include methyl methacrylate (MMA), ethyl methacrylate (EMA), n-propyl methacrylate (PMA), butyl methacrylate (BMA), styrene (St), butyl acrylate (BA), and 2-ethylhexyl acrylate (2EHA).

The combination of monomers is not particularly limited, but examples thereof include a combination containing at least ethyl methacrylate, butyl acrylate, and 2-ethylhexyl acrylate, a combination containing at least methyl methacrylate, butyl acrylate, and 2-ethylhexyl acrylate, a combination containing at least n-propyl methacrylate, butyl acrylate, and 2-ethylhexyl acrylate, and a combination containing at least butyl methacrylate, butyl acrylate, and 2-ethylhexyl acrylate.

The aqueous pressure-sensitive adhesive composition contains, as the (meth)acrylic resin, at least a first (meth)acrylic resin and a second (meth)acrylic resin, and a glass transition temperature Tg1 of the first (meth)acrylic resin is preferably higher than a glass transition temperature Tg2 of the second (meth)acrylic resin. By containing the two types of (meth)acrylic resins having different glass transition temperatures Tg, the adhesive force, the improvement of durability, and the effect of suppressing a decrease in adhesive force during brushing tend to be further improved.

The glass transition temperature Tg1 of the first (meth)acrylic resin is not particularly limited, and is preferably -25°C or higher and 25°C or lower and more preferably -20°C or higher and 20°C or lower. By adjusting the glass transition temperature Tg1 to be in the above-described range, the adhesive force tends to be further improved.

The glass transition temperature Tg2 of the second (meth)acrylic resin is not particularly limited, and is preferably -70°C or higher and -15°C or lower and more preferably - 65°C or higher and -20°C or lower. By adjusting the glass transition temperature Tg2 to be in the above-described range, a decrease in adhesive force during brushing tends to be further suppressed.

A difference |Tg1 - Tg2| between the glass transition temperature Tg1 and the glass transition temperature Tg2 is preferably 10°C or higher and 50°C or lower and more preferably 15°C or higher and 45°C or lower. By adjusting the difference |Tg1 - Tg2| to be in the above-described range, the adhesive force and the effect of suppressing a decrease in adhesive force during brushing tend to be further improved.

The glass transition temperature can be adjusted based on a glass transition temperature of a homopolymer of a polymerizable compound to be used and a content weight ratio of a polymerizable compound to be used. The glass transition temperature can be measured using a well-known method in the related art.

The monomer in the first (meth)acrylic resin is not particularly limited, but is preferably a monomer containing at least ethyl methacrylate, butyl methacrylate, butyl acrylate, and 2-ethylhexyl acrylate, a monomer containing at least ethyl methacrylate, styrene, butyl acrylate, and 2-ethylhexyl acrylate, a monomer containing at least methyl methacrylate, butyl acrylate, and 2-ethylhexyl acrylate, or a monomer containing at least butyl methacrylate, butyl acrylate, and 2-ethylhexyl acrylate. By using the first (meth)acrylic resin containing the above-described monomer, the adhesive force and the effect of suppressing a decrease in adhesive force during brushing tend to be further improved.

It is preferable that the first (meth)acrylic resin contains, as a constituent unit, a (meth)acrylic monomer where a glass transition temperature of a homopolymer is 40°C or higher. Since the first (meth)acrylic resin contains the above-described monomer, the adhesive force of the pressure-sensitive adhesive layer 11 and the effect of suppressing a decrease in adhesive force during brushing tend to be further improved.

The content of the (meth)acrylic monomer where a glass transition temperature of a homopolymer is 40°C or higher is preferably 20% by weight or more and 70% by weight or less and more preferably 25% by weight or more and 65% by weight or less with respect to the total amount of the first (meth)acrylic resin. By adjusting the content of the (meth)acrylic monomer where a glass transition temperature of a homopolymer is 40°C or higher to be in the above-described range, the adhesive force of the pressure-sensitive adhesive layer 11 and the effect of suppressing a decrease in adhesive force during brushing tend to be further improved.

The monomer in the second (meth)acrylic resin is not particularly limited, but is preferably a monomer containing at least ethyl methacrylate, butyl methacrylate, butyl acrylate, and 2-ethylhexyl acrylate, or a monomer containing at least n-propyl methacrylate, butyl methacrylate, butyl acrylate, and 2-ethylhexyl acrylate. By using the second (meth)acrylic resin containing the above-described monomer, the adhesive force and the effect of suppressing a decrease in adhesive force during brushing tend to be further improved.

The content of the first (meth)acrylic resin is preferably 50% by weight or more and 85% by weight or less, and more preferably 53% by weight or more and 82% by weight or less with respect to the total amount of the first (meth)acrylic resin and the second (meth)acrylic resin. By adjusting the content of the first (meth)acrylic resin to be in the above-described range, the adhesive force of the pressure-sensitive adhesive layer 11 and the effect of suppressing a decrease in adhesive force during brushing tend to be further improved.

The content of the second (meth)acrylic resin is preferably less than 50% by weight, and more preferably 10% by weight or more and 48% by weight or less with respect to the total amount of the first (meth)acrylic resin and the second (meth)acrylic resin. By adjusting the content of the second (meth)acrylic resin to be in the above-described range, the adhesive force of the pressure-sensitive adhesive layer 11 and the effect of suppressing a decrease in adhesive force during brushing tend to be further improved.

The content of the (meth)acrylic resin is preferably 20% by weight or more and 70% by weight or less, and more preferably 30% by weight or more and 60% by weight or less with respect to the total amount of the aqueous pressure-sensitive adhesive composition (application liquid 12). By adjusting the content of the (meth)acrylic resin to be 20% by weight or more, the adhesive force or the durability of the obtained pressure-sensitive adhesive layer 11 tends to be further improved. In addition, by adjusting the content of (meth)acrylic resin to be 70% by weight or less, the coating properties and preservability of the aqueous pressure-sensitive adhesive composition tend to be further improved. The content of the resin with respect to the total amount of the aqueous pressure-sensitive adhesive composition refers to the amount of solid content.

The content of the first (meth)acrylic resin is preferably 10% by weight or more and 70% by weight or less, and more preferably 20% by weight or more and 60% by weight or less with respect to the total amount of the aqueous pressure-sensitive adhesive composition (application liquid 12). By adjusting the content of the first (meth)acrylic resin to be in the above-described range, the adhesive force of the pressure-sensitive adhesive layer 11 and the effect of suppressing a decrease in adhesive force during brushing tend to be further improved.

The content of the second (meth)acrylic resin is preferably 50% by weight or less, and more preferably 1% by weight or more and 40% by weight or less with respect to the total amount of the aqueous pressure-sensitive adhesive composition (application liquid 12). By adjusting the content of the second (meth)acrylic resin to be in the above-described range, the adhesive force of the pressure-sensitive adhesive layer 11 and the effect of suppressing a decrease in adhesive force during brushing tend to be further improved.

The aqueous pressure-sensitive adhesive composition may contain a resin other than the (meth)acrylic resin. The other resin is not particularly limited and examples thereof include a urethane resin, a silicone resin, and various elastomers (rubber-based materials). The resin is not limited to the above-described (meth)acrylic resin or a resin mainly formed of a (meth)acrylic resin, and examples thereof include a urethane resin, a silicone resin, and various rubber-based materials.

### Adhesion-Imparting Agent

It is preferable that the aqueous pressure-sensitive adhesive composition does not contain an adhesion-imparting agent or contains a small amount of an adhesion-imparting agent. When the aqueous pressure-sensitive adhesive composition does not contain an adhesion-imparting agent or includes a small amount of an adhesion-imparting agent, the adhesive force of the pressure-sensitive adhesive layer 11 and the effect of suppressing a decrease in adhesive force during brushing tend to be maintained. Representative examples of the adhesion-imparting agent include a rosin-based compound, a terpene-based compound, and a hydrocarbon resin. More specific examples of the adhesion-imparting agent include: a rosin-based compound such as natural rosin, a modified rosin, a glycerol ester of natural rosin, a glycerol ester of modified rosin, a pentaerythritol ester of natural rosin, or a pentaerythritol ester of modified rosin; a terpene-based compound such as a copolymer of natural terpene, a three-dimensional polymer of natural terpene, an aromatic modified terpene resin, a hydrogenated derivative of an aromatic modified terpene resin, a terpene phenol resin, or a terpene resin (monoterpene, diterpene, triterpene, polypentene, and the like); and a hydrocarbon resin such as an aliphatic petroleum hydrocarbon resin (C5 resin), a hydrogenated derivative of the aliphatic petroleum hydrocarbon resin, an aromatic petroleum hydrocarbon resin (C9 resin) such as a styrene oligomer, or a hydrogenated derivative of the aromatic petroleum hydrocarbon resin.

It is preferable that the aqueous pressure-sensitive adhesive composition does not contain an adhesion-imparting agent or contains a small amount of an adhesion-imparting agent. When the aqueous pressure-sensitive adhesive composition contains the adhesion-imparting agent, the content thereof is not particularly limited, but is preferably 5% by weight or less, more preferably 4% by weight or less, and even more preferably 0.1% by weight or more and 3.8% by weight or less with respect to the total amount of the aqueous pressure-sensitive adhesive composition (application liquid 12). By adjusting the content of the adhesion-imparting agent to be in the above-described range, the adhesive force of the obtained pressure-sensitive adhesive layer 11 and the effect of suppressing a decrease in adhesive force during brushing tend to be maintained. From the same viewpoint, the total content of compounds selected from the group consisting of the rosin-based compound, the terpene-based compound, and the hydrocarbon resin is preferably in the same range as described above.

### Water

The content (water content) of water in the aqueous pressure-sensitive adhesive composition (application liquid 12) is not particularly limited, but is preferably 30% by weight or more and 80% by weight or less, more preferably 35% by weight or more and 70% by weight or less, and still more preferably 40% by weight or more and 60% by weight or less. As a result, the application liquid 12 applied to the pressure-sensitive adhesive layer formation surface 111s is likely to be smoothed to a uniform thickness.

### Surfactant

The aqueous pressure-sensitive adhesive composition may include a surfactant. The surfactant is not particularly limited, and examples thereof include an anionic surfactant, a nonionic surfactant, and a cationic surfactant.

Examples of the anionic surfactant include an alkyl sulfate such as alkyl sulfocarboxylate, alkyl diphenyl ether disulfonate, α-olefin sulfonate, polyoxyethylene alkyl ether acetate, N-acylamino acid and a salt thereof, an N-acylmethyl taurine salt, ammonium lauryl sulfate, or sodium lauryl sulfate, alkyl sulfate polyoxyalkyl ether sulfate, alkyl sulfate polyoxyethylene alkyl ether phosphate, rosin acid soap, castor oil sulfate ester, lauryl alcohol sulfate ester, alkylphenol type phosphate ester, alkyl type phosphate ester, alkylaryl sulfonate, diethyl sulfosuccinate, diethyl hexyl sulfosuccinate, and dioctyl sulfosuccinate.

Examples of the nonionic surfactant include an acetylene glycol-based surfactant, a silicone-based surfactant, polyoxyethylene alkyl ether, polyoxyethylene alkyl phenyl ether, polyoxyethylene fatty acid ester, polyoxyethylene hardened castor oil, propylene glycol fatty acid ester, glycerin fatty acid ester, polyglycerin fatty acid ester, sorbitan fatty acid ester, sucrose fatty acid ester, alkyl polyglycoside, alkyl diethanolamide, and alkyl amine oxide. A commercially available product of nonionic surfactant is not particularly limited, and examples thereof include EMULGEN 123P, 430, 1108 (trade names manufactured by Kao Corporation), NEWCOL 1006, 1008, 1020 (trade names manufactured by Nippon Nyukazai Co., Ltd.), and NOIGEN DL-0415, ET-116B, ET-106A, DH-0300, YX-400, EA-160 (trade names manufactured by DKS Co., Ltd.).

Examples of the cationic surfactant include alkylamine salts, fatty acid amidoamine salts, monoalkyl quaternary ammonium salts, dialkyl quaternary ammonium salts, trialkyl quaternary ammonium salts, benzalkonium quaternary ammonium salts, benzetonium chloride, and alkylpyridinium salts.

In the present embodiment, the nonionic surfactant is preferable among these. More specifically, an alkyl ether-based nonionic surfactant is preferable. By using the surfactant, the durability tends to be maintained.

The content of the surfactant is preferably 1% by weight or more and 7% by weight or less, and more preferably 2% by weight or more and 6% by weight or less with respect to the total amount of the aqueous pressure-sensitive adhesive composition (application liquid 12). Organic Solvent

From the viewpoint of reducing the environmental burden or the effect on a human body, it is preferable that the aqueous pressure-sensitive adhesive composition according to the present embodiment does not contain an organic solvent or contains a small amount of an organic solvent. In addition, when the aqueous pressure-sensitive adhesive composition contains an organic solvent, the content of the organic solvent is preferably 5.0% by weight or less, and more preferably 2.5% by weight or less with respect to the total amount of the aqueous pressure-sensitive adhesive composition (application liquid 12). As a result, the environmental burden can be reduced, the amount of volatile organic compounds (VOC) during the use of the aqueous pressure-sensitive adhesive composition can be reduced, and thus the work environment tends to be further improved.

### Coloring Material

It is preferable that the aqueous pressure-sensitive adhesive composition according to the present embodiment does not contain a coloring material or contains a small amount of a coloring material. In addition, when the aqueous pressure-sensitive adhesive composition contains the coloring material, the content of the coloring material is preferably 1.0% by weight or less, and more preferably 0.5% by weight or less with respect to the total amount of the aqueous pressure-sensitive adhesive composition (application liquid 12). As a result, the aqueous pressure-sensitive adhesive composition according to the present embodiment is clearly distinguished from a coloring composition such as an ink composition, a printing paste, or a coating material.

### Storage Elastic Modulus

The aqueous pressure-sensitive adhesive composition according to the present embodiment is a raw material for forming the pressure-sensitive adhesive layer 11 at the transport belt 111 of the printing apparatus 100. The pressure-sensitive adhesive layer 11 according to the present embodiment is derived from the aqueous pressure-sensitive adhesive composition but has a sufficient adhesive force for holding and transporting the recording medium W and has excellent retention of the adhesive force, that is, durability. As a result, the transport belt 111 can transport the recording medium W in a state where the recording medium W is reliably held. Therefore, printing defects (flaws) such as position deviation of printing caused by holding failure, transport failure, or the like of the recording medium W can be suppressed, and printing can be appropriately and favorably performed. Further, this effect can be maintained over a long period of time. The pressure-sensitive adhesive layer 11 has the following properties and physical properties.

The storage elastic modulus of the pressure-sensitive adhesive layer 11 obtained in the present embodiment at 23°C is preferably 1.5 × 10⁵ Pa or more and 5.0 × 10⁵ Pa or less, more preferably 1.6 × 10⁵ Pa or more and 4.8 × 10⁵ Pa or less, and still more preferably 2.0 × 10⁵ Pa or more and 4.5 × 10⁵ Pa or less. By adjusting the storage elastic modulus to be 1.5 × 10⁵ Pa or more, a decrease in the adhesive force of the adhesion surface caused by water cleaning can be suppressed. In addition, by adjusting the storage elastic modulus to be 5.0 × 10⁵ Pa or less, an initial adhesive force can be increased.

A method of forming the pressure-sensitive adhesive layer 11 for which the storage elastic modulus is to be measured is not particularly limited, and for example, a method of applying the aqueous pressure-sensitive adhesive composition to a 25 mm wide glass slide to have a thickness of 0.2 mm at normal temperature and drying the aqueous pressure-sensitive adhesive composition under conditions of humidity of 50%, 23°C, and 12 hours can be adopted.

When the pressure-sensitive adhesive layer 11 (hereinafter, referred to as "first acrylic pressure-sensitive adhesive layer") formed of only the first (meth)acrylic resin is formed using the same method as the aqueous pressure-sensitive adhesive composition, the storage elastic modulus of the first acrylic pressure-sensitive adhesive layer at 23°C is not particularly limited, but is preferably 1.0 × 10⁵ Pa or more and 8.0 × 10⁵ Pa or less, and more preferably 1.6 × 10⁵ Pa or more and 7.6 × 10⁵ Pa or less. By adjusting the storage elastic modulus of the first acrylic pressure-sensitive adhesive layer to be in the above-described range, the adhesive force of the pressure-sensitive adhesive layer 11 and the effect of suppressing a decrease in adhesive force during brushing tend to be further improved.

When the pressure-sensitive adhesive layer 11 (hereinafter, referred to as "second acrylic pressure-sensitive adhesive layer") formed of only the second (meth)acrylic resin is formed using the same method as the aqueous pressure-sensitive adhesive composition, the storage elastic modulus of the second acrylic pressure-sensitive adhesive layer at 23°C is not particularly limited, but is preferably 6.0 × 10⁵ Pa or more and 8.0 × 10⁵ Pa or less, and more preferably 7.0 × 10⁵ Pa or more and 7.5 × 10⁵ Pa or less. By adjusting the storage elastic modulus of the second acrylic pressure-sensitive adhesive layer to be in the above-described range, the adhesive force of the pressure-sensitive adhesive layer 11 and the effect of suppressing a decrease in adhesive force during brushing tend to be further improved.

### Adhesive Force

The adhesive force of the pressure-sensitive adhesive layer 11 obtained in the present embodiment at normal temperature (23°C) is not particularly limited, but is preferably 0.3 N/50 mm or more and 3.0 N/50 mm or less, more preferably 0.5 N/50 mm or more and 2.0 N/50 mm or less, and still more preferably 0.7 N/50 mm or more and 1.8 N/50 mm or less. By adjusting the adhesive force at 23°C to be in the above-described range, the favorable adhesive force of the pressure-sensitive adhesive layer 11 and the effect of suppressing a decrease in adhesive force during brushing tend to be further improved.

### Viscosity

The viscosity of the application liquid 12 at normal temperature (23°C) when the pressure-sensitive adhesive layer 11 is formed is not particularly limited, but is preferably 1 cps or more and 500 cps or less, more preferably 5 cps or more and 470 cps or less, and still more preferably 100 cps or more and 450 cps or less, and particularly preferably 120 cps or more and 400 cps or less. As a result, the application liquid 12 applied to the pressure-sensitive adhesive layer formation surface 111s can be likely to be smoothed to a uniform thickness, which contributes to uniformity of the thickness of the obtained pressure-sensitive adhesive layer 11 and homogenization of surface properties thereof.

### Thickness

The average thickness of the pressure-sensitive adhesive layer 11 formed at the transport belt 111 is not particularly limited, but is, for example, preferably 0.03 mm or more and 7.0 mm or less, more preferably 0.08 mm or more and 1.0 mm or less, and still more preferably 0.1 mm or more and 0.5 mm or less. By adjusting the average thickness of the pressure-sensitive adhesive layer 11 to be in the above-described range, the adhesive force of the pressure-sensitive adhesive layer 11 can be improved and the durability thereof can be enhanced. When the pressure-sensitive adhesive layer 11 is formed using the application liquid 12, the pressure-sensitive adhesive layer 11 that is uniform and homogeneous and has favorable adhesion with the pressure-sensitive adhesive layer formation surface 111s can be relatively easily formed.

Next, the application liquid supply source 170a of the application liquid supply unit 170 will be described.

As illustrated in FIG. 2, the application liquid supply source 170a applies the application liquid 12 of the aqueous pressure-sensitive adhesive to a region of the pressure-sensitive adhesive layer formation surface 111s of the transport belt 111 that is positioned above the drive roller 112a and the driven roller 112b. The application liquid supply source 170a includes a reservoir 171 that stores the application liquid 12, a liquid feeding pipe 172 that feeds the application liquid 12 in the reservoir 171 to the vicinity of the pressure-sensitive adhesive layer formation surface 111s of the transport belt 111, and a liquid feeding pump 173 that is provided halfway the liquid feeding pipe 172.

The reservoir 171 is configured with a hard or flexible container that can contain the application liquid 12. An upper end portion (one end portion) of the liquid feeding pipe 172 is coupled to the reservoir 171. A lower end portion (other end portion) of the liquid feeding pipe 172 is positioned above the pressure-sensitive adhesive layer formation surface 111s of the transport belt 111 and downstream of the printing unit 140 in the transport direction of the recording medium W (- side of the y-axis direction). By operating the liquid feeding pump 173, the application liquid 12 in the reservoir 171 is fed through the liquid feeding pipe 172 and discharged to the pressure-sensitive adhesive layer formation surface 111s of the transport belt 111 from the lower end portion of the liquid feeding pipe 172.

Although not illustrated in the drawing, the lower end portion of the liquid feeding pipe 172 is branched into a plurality of paths. The branched flow paths on the branch site are disposed side by side along the x-axis direction, that is, along the width direction of the transport belt 111. As a result, the application liquid 12 can be evenly (in a proper amount) and uniformly supplied to a necessary region of the pressure-sensitive adhesive layer formation surface 111s. A nozzle, an orifice, or the like may be provided at the lower end portion of the liquid feeding pipe 172.

The supply amount per unit time of the application liquid 12 supplied from the liquid feeding pipe 172 to the pressure-sensitive adhesive layer formation surface 111s, that is, the total supply amount of the branched flow paths (hereinafter, simply referred to as "supply amount") is not particularly limited, but is preferably 15 ml/min or more and 67 ml/min or less, and more preferably 22 ml/min or more and 50 ml/min or less. By adjusting the supply amount, the application liquid 12 can be rapidly applied, and the coating film 13 can be more uniformly and favorably smoothed by the blade 170b.

The application liquid supply source 170a may be configured to continuously supply the application liquid 12, or may be configured to intermittently supply the application liquid 12.

A configuration and a method of applying the aqueous pressure-sensitive adhesive to the transport belt are not limited to the above description. For example, the reservoir may be configured with a flexible container, and the application liquid supply source may include a pressurization unit that pressurizes the reservoir from the outside. In this case, the pressurization unit pressurizes the reservoir to press the application liquid in the reservoir into the liquid feeding pipe. The application liquid is discharged from the lower end portion of the liquid feeding pipe and applied to the transport belt. Examples of the pressurization unit include a pressurization unit configured to pressurize the reservoir by air pressure, and a pressurization unit configured to physically pressurize the reservoir by a member such as a pressurization plate or a pressurization roller. In addition, the application liquid supply source may be configured to supply the application liquid in the reservoir to the transport belt in free fall through the liquid feeding pipe. In addition, instead of providing the application liquid supply source in the printing apparatus, for example, the application liquid may be configured to be applied to the transport belt from an external application liquid supply source. Further, the application liquid supply source itself does not need to be present regardless of whether or not the application liquid supply source is provided in the printing apparatus. In this case, the aqueous pressure-sensitive adhesive can be applied to the transport belt using a method of allowing an operator to apply the aqueous pressure-sensitive adhesive to the transport belt using an application tool.

Next, the blade 170b will be described.

In a state where the transport belt 111 is circulated and rotated, the blade 170b smoothes the application liquid 12 supplied from the application liquid supply source 170a to the pressure-sensitive adhesive layer formation surface 111s. That is, the blade 170b has a function as a so-called squeegee. The blade 170b has an elongated shape extending in the width direction of the transport belt 111. The coating film 13 having a substantially uniform thickness is formed by the blade 170b.

The blade 170b may be hard (rigid) or flexible. A constituent material of the blade 170b is not particularly limited, and examples thereof include various metal materials, various ceramic materials, various resin materials, various rubber materials, and resin materials or rubber materials where a reinforcing member such as a fiber material is embedded.

The blade 170b is configured to be movable in the z-axis direction using a movement mechanism (not illustrated). Examples of the movement mechanism include a drive source such as an air cylinder, an oil cylinder, or a solenoid.

When the application liquid 12 applied from the application liquid supply source 170a is smoothed to form the coating film 13, the blade 170b is disposed above the transport belt 111. More specifically, the blade 170b is provided between the lower end portion of the liquid feeding pipe 172 and the printing unit 140, that is, upstream of the lower end portion of the liquid feeding pipe 172 in the transport direction of the recording medium W (+ side of the y-axis direction) and downstream of the printing unit 140 in the transport direction of the recording medium W (- side of the y-axis direction).

On the other hand, as illustrated in FIG. 1, for example, in a state where the application liquid 12 is not smoothed such as a state (second mode) where printing is performed on the recording medium W or a state where the formation of the coating film 13 ends, the blade 170b is withdrawn to a retreat position above the transport belt 111. Here, instead of providing the movement mechanism of the blade in the printing apparatus, the operator may attach or detach the blade to or from a transport device as necessary.

As illustrated in FIG. 2, when the application liquid 12 is smoothed to form the coating film 13, the lower end portion of the blade 170b (end portion on the - side of the z-axis direction) is separated from the pressure-sensitive adhesive layer formation surface 111s by a predetermined distance G. This distance G is one important element for determining the thickness of the pressure-sensitive adhesive layer 11. The distance G is appropriately determined depending on various conditions such as the composition, the viscosity, and the supply amount of the application liquid 12 described above and the desired adhesive force of the pressure-sensitive adhesive layer 11. When at least one, in particular, two or three among the composition, the viscosity and the supply amount of the application liquid 12 and the adhesive force of the pressure-sensitive adhesive layer 11 is in the above-described preferable range, the distance G is preferably 0.05 mm or more and 5 mm or less, and more preferably 0.1 mm or more and 0.5 mm or less. As a result, the coating film 13 having a more uniform thickness can be formed.

The distance G is preferably substantially uniform along the longitudinal direction of the blade 170b, that is, the x-axis direction. As a result, the thickness of the coating film 13 in the x-axis direction can be made uniform.

The length of the blade 170b in the width direction (x-axis direction) of the transport belt 111 is not particularly limited, but is preferably 50 cm or more and 300 cm or less, and more preferably 100 cm or more and 200 cm or less. As a result, the length of the blade 170b in the width direction of the transport belt 111 can be made equal to or longer than the width of the transport belt 111 irrespective of the model of the printing apparatus 100 or the size of the transport belt 111. Accordingly, the blade 170b can cover the entire region or an effective region of the transport belt 111 in the width direction and can smooth the application liquid 12.

A configuration and a method for smoothing the application liquid of the aqueous pressure-sensitive adhesive on the transport belt (for forming the coating film) are not limited to the above description. For example, in the printing apparatus, another tool for smoothing such as a squeegee, a roller, a brush, or an air knife may be provided instead of the blade. In addition, instead of providing the tool for smoothing such as a blade in the printing apparatus, an operator may smooth the application liquid on the transport belt using a tool such as a squeegee, a roller, or a brush.

Next, the heating unit 180 will be described.

The heating unit 180 is disposed on the outer peripheral side of the transport belt 111. More specifically, as illustrated in FIGS. 1 and 2, the heating unit 180 may be disposed immediately below the transport belt 111 and on the + side of the y-axis direction further than the cleaning unit 160. The heating unit 180 is separated from the pressure-sensitive adhesive layer formation surface 111s of the transport belt 111, is separated from the coating film 13 and the pressure-sensitive adhesive layer 11 formed thereabove, and is in non-contact with the above components. Therefore, when the coating film 13 and the pressure-sensitive adhesive layer 11 are heated, damage or attachment of contamination to the coating film 13 and the pressure-sensitive adhesive layer 11 can be suppressed.

The heating unit 180 includes a radiation plate 181, a heat source 182 that heats the radiation plate 181, and a frame 183 as a base portion that fixes the radiation plate 181 and the heat source 182.

The radiation plate 181 extends along the width direction (x-axis direction) of the transport belt 111. The length of the radiation plate 181 in the width direction is longer than the length of the transport belt 111 in the width direction. Both end portions of the radiation plate 181 in the width direction protrude in the width direction (the + side and the - side of the x-axis direction) from the transport belt 111 when seen from the top. A constituent material of the radiation plate 181 is not particularly limited, and examples thereof include various metal materials, for example, aluminum or an aluminum alloy, copper or a copper alloy, or an iron alloy such as stainless steel. In addition, in the radiation plate 181, a metal layer may be joined to a heat-resistant material such as a ceramic material or glass.

The heat source 182 may be joined to a lower surface of the radiation plate 181 by bonding or the like. In the present embodiment, the heat source 182 is configured with a sheet-like heater. The sheet-like heater is configured such that a heating element such as metal foil is interposed in a sheet member such as a flexible synthetic resin. The heat source 182 extends along the width direction of the transport belt 111. The length of the heat source 182 in the width direction is longer than the length of the transport belt 111 in the width direction. Both end portions of the heat source 182 in the width direction protrude in the width direction (the + side and the - side of the x-axis direction) from the transport belt 111 when seen from the top.

The heat source 182 generates heat when power is supplied to the heating element, and the generated heat is transmitted to the radiation plate 181. The radiation plate 181 is heated by the heat transmitted from the heat source 182. The heated radiation plate 181 radiates heat toward the transport belt 111.

In the state (first mode) where the pressure-sensitive adhesive layer 11 is formed, the heating unit 180 heats the coating film 13 on the transport belt 111. As a result, the coating film 13 on the transport belt 111 is dried to form the pressure-sensitive adhesive layer 11. Here, "drying" has the same meaning as "draining" or "dehydrating", and refers to decreasing the water content of the coating film 13. "Pressure-sensitive adhesive layer 11" in the present specification refers to a layer obtained by evaporating at least a part of water in the coating film 13, that is, a layer obtained by decreasing the water content, and water may remain in the pressure-sensitive adhesive layer 11.

The water content of the pressure-sensitive adhesive layer 11 that is heated and dried by the heating unit 180 is not particularly limited, and is, for example, preferably 0.01% by weight or more and 5% by weight or less, more preferably 0.1% by weight or more and less than 2% by weight, and still more preferably 0.5% by weight or more and less than 1% by weight. By adjusting the water content of the pressure-sensitive adhesive layer 11 to be the upper limit value or less, attachment of the pressure-sensitive adhesive layer 11 to the recording medium W can be suppressed. By adjusting the water content of the pressure-sensitive adhesive layer 11 to be the lower limit value or more, curing of the pressure-sensitive adhesive layer 11 is suppressed, and the pressure-sensitive adhesive layer 11 easily adheres to the recording medium W.

On the other hand, in the state (second mode) where printing is performed on the recording medium W, the heating unit 180 heats the pressure-sensitive adhesive layer 11 on the transport belt 111. As a result, the pressure-sensitive adhesive layer 11 is appropriately softened and easily adheres to the recording medium W. Therefore, the adhesive force of the pressure-sensitive adhesive layer 11 to the recording medium W increases, and favorable retention of the recording medium W is exhibited.

Here, the configuration of the heating unit is not limited to the above description as long as the coating film and the pressure-sensitive adhesive layer can be heated. For example, the heating unit does not need to include the radiation plate. In addition, as the heat source of the heating unit, a rod-like heater, or an infrared heater such as a sheath heater, a cartridge heater, or a ceramic heater may be used instead of the sheet-like heater.

In addition, the position of the heating unit is not limited to the position illustrated in the drawing. The position of the heating unit may be any position where the pressure-sensitive adhesive layer can be heated before adhering to the recording medium in the second mode and the coating film can be heated in the first mode. For example, the heating unit may be disposed on the + side of the y-axis direction of the drive roller. In addition, the heating unit may be disposed inside the transport belt to heat the pressure-sensitive adhesive layer and the coating film through the transport belt. In addition, the heating unit may be provided in an arc shape to go under the drive roller from the + side of the y-axis direction of the drive roller. By disposing at least a part of the heating unit on the + side of the y-axis direction of the drive roller, the viscosity of the coating film on the - side of the y-axis direction of the drive roller increases to ensure shape retention. Therefore, when the coating film goes under the outer peripheral side of the drive roller, liquid drop from the coating film, deformation of the coating film by gravity, or the like can be suppressed.

In the present embodiment, the heating unit 180 is provided to be fixed to the transport device 110, but is not limited thereto. For example, the heating unit may be movable along the rotation direction of the transport belt (for example, the y-axis direction or the z-axis direction). In this case, a movement mechanism that moves the heating device may be provided in the printing apparatus to set the position of the heating unit, for example, a position in the y-axis direction or a position in the z-axis direction such that heating is made to be suitable for each of the first mode and the second mode by the operation of the movement mechanism. Examples of the movement mechanism include a mechanism having a configuration including a drive source such as an air cylinder, an oil cylinder, or a solenoid.

Next, the control unit 191 will be described.

The control unit 191 is electrically coupled to each of the drive unit 112, the rotation detection unit 115, the uncoiling device 120, the coiling device 130, the printing unit 140, the ink drying unit 150, the cleaning unit 160, the application liquid supply unit 170, the heating unit 180, and the operation unit 197 of the transport device 110, and signals are transmitted and received therebetween to control the operations thereof or to acquire information. The control unit 191 includes a storage unit 192, an arithmetic processing unit 193, and a communication unit 194. In addition, the control unit 191 may be equipped with a time piece (timer) to control an operation timing of each of the units in the printing apparatus 100.

The storage unit 192 stores a program for executing the operation of each of the units in the printing apparatus 100, information regarding operating conditions, or the like. Examples of the storage unit 192 include a volatile memory such as a random access memory (RAM), and a non-volatile memory such as a read only memory (ROM).

The arithmetic processing unit 193 is configured with, for example, a processor such as a central processing unit (CPU), and reads and executes various programs such as an operation program stored in the storage unit.

The communication unit 194 is an interface through which signals are transmitted and received between the units of the printing apparatus 100. The communication unit 194 is connected to each of the units of the printing apparatus 100 by wire or wirelessly.

The control unit 191 is selectable between the first mode where the pressure-sensitive adhesive layer 11 is formed and the second mode where printing is performed on the recording medium W. The details of the control method in each of the modes will be described below.

Next, the operation unit 197 will be described.

The operation unit 197 may be configured with a touch panel that also has a function as a display unit. The operation unit 197 displays a selection screen for the first mode and the second mode. The user operates the operation unit 197 to select the first mode when it is desired to form the pressure-sensitive adhesive layer 11 and to select the second mode when it is desired to perform printing on the recording medium W. The control unit 191 performs a control of each of the units according to the mode selected by the user in the operation unit 197.

Here, the configuration of the operation unit is not limited to the above description. For example, the selection screen for the first mode and the second mode may be displayed on a display unit such as a liquid crystal panel, and the operation unit may be configured with an operation button, a keyboard, a mouse, or the like separately from the display unit. In addition, the operation unit may be configured to have a physical operation button or switch that can switch between the modes. In addition, the operation unit may be configured to recognize a voice output from the user to select between the first mode and the second mode.

In addition, instead of providing the operation unit in the printing unit, the selection of the first mode or the second mode may be configured to be performed by the control unit or an external device that can communicate with the control unit automatically or in accordance with a predetermined program (sequence control). With this configuration, for example, the control unit may be equipped with a time piece to perform the selection (switching) between the first mode and the second mode based on a predetermined timing chart.

Next, a control method of the printing apparatus 100 will be described.

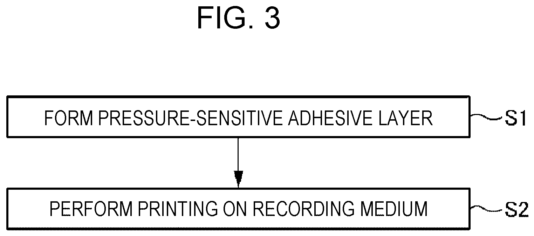

FIG. 3 is a flowchart illustrating the control method of the printing apparatus 100 illustrated in FIG. 1.

The control method of the printing apparatus 100 includes a first step S1 of forming the pressure-sensitive adhesive layer 11 and a second step S2 of performing printing on the recording medium W. The first step S1 corresponds to the first mode, and the second step S2 corresponds to the second mode.

Before the first step S1 of forming the pressure-sensitive adhesive layer 11, the old pressure-sensitive adhesive layer 11 on the transport belt 111 is removed in advance. In addition, as illustrated in FIG. 2, it is assumed that the transport belt 111 does not hold the recording medium W, and the blade 170b is disposed above the transport belt 111. The user operates the operation unit 197 to select the first mode.

As a result, the first step S1 of forming the pressure-sensitive adhesive layer 11 is performed. Specifically, while operating the drive unit 112 of the transport device 110 to rotate the drive roller 112a in the second direction a2 and to circulate and rotate the transport belt 111 clockwise in FIG. 2, the control unit 191 operates the application liquid supply source 170a to supply the application liquid 12 of the aqueous pressure-sensitive adhesive to the transport belt 111.

The supplied application liquid 12 passes through a gap between the lower end of the blade 170b and the pressure-sensitive adhesive layer formation surface 111s to form the coating film 13. The coating film 13 moves to the + side of the y-axis direction along with the traveling of the transport belt 111, goes under the outer peripheral side of the drive roller 112a, and further passes through a region above the heating unit 180 to the - side of the y-axis direction. The coating film 13 is naturally dried to a certain degree while passing through the lower end of the blade 170b, moving to the + side of the y-axis direction, and going under the outer peripheral side of the drive roller 112a. As a result, the viscosity of the coating film 13 increases to ensure shape retention. Therefore, before the coating film 13 reaches the heating unit 180, liquid drop from the coating film 13, deformation of the coating film 13 by gravity, or the like can be suppressed.

The control unit 191 operates the heating unit 180 to heat and dry the coating film 13 such that the pressure-sensitive adhesive layer 11 is formed. At this time, the application liquid supply source 170a may supply the application liquid 12 such that the coating film 13 is a single layer, or may supply the application liquid 12 such that the coating film 13 is a laminate of a plurality of layers. After the coating film 13 having a desired thickness is formed over the entire periphery of the transport belt 111, the control unit 191 stops the operation of the application liquid supply unit 170.

The transport belt 111 circulates and rotates multiple times from the start to the end of the heating of the coating film 13 by the heating unit 180. As a result, the coating film 13 can be sufficiently dried. Here, as long as the coating film 13 is sufficiently dried, the transport belt 111 may circulate and rotate only once.

When it is determined that the coating film 13 is sufficiently dried to form the pressure-sensitive adhesive layer 11, the control unit 191 notifies the determination to the operation unit 197 by display or the like, stops the operations of the heating unit 180 and the drive unit 112, and can select the second mode in the operation unit 197. The control unit 191 may determine that the pressure-sensitive adhesive layer 11 having appropriate characteristics (water content, thickness, viscosity, and the like) is formed when recognizing lapse of a predetermined time from the start of the first mode using a time piece equipped therein. In addition, the control unit 191 may determine that the pressure-sensitive adhesive layer 11 having appropriate characteristics is formed when the transport belt 111 is circulated and rotated a predetermined number of times from the start of the first mode.

In addition, by providing a pressure-sensitive adhesive layer detection unit that can detect the characteristics (water content, thickness, viscosity, and the like) of the coating film in the printing apparatus, the control unit may include a determination unit that determines whether or not the pressure-sensitive adhesive layer having appropriate characteristics is formed based on the detection result of the pressure-sensitive adhesive layer detection unit. Specifically, for example, by providing a water content detection unit that can detect the water content of the coating film as the pressure-sensitive adhesive layer detection unit in the printing apparatus, the determination unit may determine that the pressure-sensitive adhesive layer 11 having appropriate characteristics is formed when the detected water content of the coating film is a predetermined threshold (upper limit value) or less. Examples of the water content detection unit include a water measuring unit using an infrared ray, an electrical resistance measuring unit, and an electrostatic capacitance measuring unit. In addition, for example, by providing a monitoring unit such as a camera that images the coating film as the pressure-sensitive adhesive layer detection unit in the printing apparatus, a determination unit may recognize characteristics of the pressure-sensitive adhesive layer and determine whether or not the pressure-sensitive adhesive layer having appropriate characteristics is formed based on the acquired image of the monitoring unit.

Next, the user operates the operation unit 197 to select the second mode. In addition, the control unit 191 operates the movement mechanism of the blade 170b to withdraw the blade 170b to a region above the transport device 110 in advance.

As a result, the second step S2 of performing printing on the recording medium W is performed. Specifically, as illustrated in FIG. 1, while operating the drive unit 112 of the transport device 110 to rotate the drive roller 112a in the first direction a1 and to circulate and rotate the transport belt 111 counterclockwise in FIG. 1, the control unit 191 operates the heating unit 180 to heat the pressure-sensitive adhesive layer 11 obtained in the first step S1. Due to the heating, the adhesive force of the pressure-sensitive adhesive layer 11 increases, and favorable retention of the recording medium W is exhibited.

In addition, the control unit 191 operates the uncoiling device 120 to uncoil the non-printed recording medium W from the uncoiling roller 121. The recording medium W uncoiled by the uncoiling device 120 adheres to the heated pressure-sensitive adhesive layer 11 at the position of the tensioner 113, is held by the transport belt 111 that is traveling by the circulation and rotation, and is transported to the downstream in the transport direction. In addition, concurrently, the control unit 191 operates the printing unit 140 to print a predetermined image pattern on the recording medium W that is held by the transport belt 111. This way, by allowing the pressure-sensitive adhesive layer 11 where the adhesive force is sufficiently improved to adhere to the recording medium W, the transport belt 111 can stably and appropriately transport the recording medium W. In addition, in the printing apparatus 100, printing defects such as printing deviation caused by holding failure, transport failure, or the like of the recording medium W can be prevented, and an appropriate and high-quality image can be printed on the recording medium W.

The printed recording medium W is separated from the pressure-sensitive adhesive layer 11 and the transport belt 111 at the position of the tensioner 114. The control unit 191 operates the ink drying unit 150 to dry the ink attached to the printed recording medium W, and operates the coiling device 130 to coil the recording medium W where the ink is dried using the coiling roller 131.

The control unit 191 may operate the cleaning unit 160 to clean the pressure-sensitive adhesive layer 11 from which the recording medium W is peeled off. The pressure-sensitive adhesive layer 11 is cooled at a timing at which it reaches the cleaning unit 160. Therefore, damage to the pressure-sensitive adhesive layer 11 by the cleaning unit 160 can be suppressed, and the pressure-sensitive adhesive layer 11 can be used again in a favorable state.

As described above, the rotation direction of the transport belt 111 in the second mode is opposite to the rotation direction of the transport belt 111 in the first mode. Therefore, a timing at which the application liquid 12 supplied to the transport belt 111 is heated by the heating unit 180 in the first mode and a timing at which the recording medium W adheres to the pressure-sensitive adhesive layer 11 heated by the heating unit 180 in the second mode are easily adjusted.

Further, the heating unit 180 is disposed below the transport belt 111, and a position where the pressure-sensitive adhesive layer 11 is heated by the heating unit 180, a position where the uncoiled recording medium W starts to adhere to the pressure-sensitive adhesive layer 11, a position (printing region 144) where the printing unit 140 performs printing on the recording medium W, and a position where the coating film 13 is formed are disposed in this order along the rotation direction of the transport belt 111 in the second mode. Therefore, in the second mode, a period of time required until the recording medium W adheres to the pressure-sensitive adhesive layer 11 after the heating unit 180 heats the pressure-sensitive adhesive layer 11 can be made relatively short. As a result, before being cooled, that is, the adhesive force is reduced, the heated pressure-sensitive adhesive layer 11 can adhere to and hold the recording medium W. On the other hand, in the first mode, the coating film 13 that passed through the blade 170b can be naturally dried to a certain degree before reaching the heating unit 180. Due to the natural drying, liquid drop from the coating film 13, deformation of the coating film 13 by gravity, or the like before the coating film 13 reaches the heating unit 180 positioned below the transport belt 111 can be suppressed.

After the portion of the recording medium W where printing is completed is coiled around the coiling roller 131 by the operation of the coiling device 130, the control unit 191 may notify (display) the coiling to the operation unit 197 or the like in accordance with, for example, the length of the recording medium W coiled or the elapsed time.

Heating conditions of the coating film 13 (aqueous pressure-sensitive adhesive) in the first mode may be the same as or different from heating conditions of the pressure-sensitive adhesive layer 11 in the second mode. However, the heating conditions in the first and second modes are preferably different from each other due to the reasons described below. "Heating conditions" in the present specification include heating temperatures of the coating film 13 and the pressure-sensitive adhesive layer 11 and heating times of the coating film 13 and the pressure-sensitive adhesive layer 11.

It is preferable that the heating conditions are set such that a total amount H1 of thermal energy applied to the coating film 13 per unit area in the first mode is more than a total amount H2 of thermal energy applied to the pressure-sensitive adhesive layer 11 per unit area in the second mode. A thermal energy ratio H1/H2 is not particularly limited and is, for example, preferably 1.2 or more and 100 or less and more preferably 10.0 or more and 50 or less. In order to satisfy the above-described heating conditions, in the present embodiment, it is assumed that, in the first mode and the second mode, the heating temperatures by the heating unit 180 are the same and the heating times are different.

The heating temperature can be set to, for example, an ambient temperature between the coating film 13 or the pressure-sensitive adhesive layer 11 and the heating unit 180, and is adjusted based on the amount of power (wattage) supplied to the heat source 182. In the first mode and the second mode, the heating temperature is not particularly limited, and is preferably 30°C or higher and 80°C or lower, more preferably 30°C or higher and 70°C or lower, and still more preferably 35°C or higher and 60°C or lower.

The heating time corresponds to the total time in which the coating film 13 or the pressure-sensitive adhesive layer 11 per unit area passes through a region immediately above a heat radiation region of the heating unit 180. Accordingly, the heating time is determined depending on the length along the y-axis direction of the heat radiation region of the heating unit 180, the rotating speed of the transport belt 111, and the number of times the coating film 13 or the pressure-sensitive adhesive layer 11 per unit area passes through a region above the heating unit 180.

Here, "heat radiation region" refers to a region where the heating unit 180 radiates heat to the transport belt 111. In the present embodiment, the radiation plate 181 and the heat source 182 correspond to the heat radiation region. In the present embodiment, the lengths along the y-axis direction of the radiation plate 181 and the heat source 182 are fixed irrespective of the first mode and the second mode. Here, the length along the y-axis direction of the heat radiation region can change depending on each of the modes, and the heating time may be adjusted by changing the length along the y-axis direction of the heat radiation region depending on the mode. Examples of the configuration of the heating unit include a configuration where the radiation plate and the heat source are combined as one set, a plurality of the sets are disposed along the y-axis direction, and the number of heat sources to which power is supplied changes depending on the mode.

In the present embodiment, by making a clockwise rotating speed V1 in FIG. 2 of the transport belt 111 in the first mode and a counterclockwise rotating speed V2 in FIG. 1 of the transport belt 111 in the second mode to be different from each other, there is a difference between the total amount H1 of thermal energy and the total amount H2 of thermal energy. In particular, the heating temperatures of the heating unit 180 in the first mode and the second mode may be set to be the same, whereas the rotating speed V1 of the transport belt 111 in the first mode may be set to be slower than the rotating speed V2 of the transport belt 111 in the second mode. As a result, in the first mode where the pressure-sensitive adhesive layer 11 is formed, the coating film 13 can be sufficiently dried, and the pressure-sensitive adhesive layer 11 having favorable adhesive force and durability can be formed. In addition, the coating film 13 on the transport belt 111 can be naturally dried to a certain degree before reaching the heating unit 180 positioned below the transport belt 111. Therefore, as described above, liquid drop from the coating film 13, deformation of the coating film 13 by gravity, or the like can be suppressed.

On the other hand, in the second mode where the use frequency is high, by rotating the transport belt 111 at the relatively fast rotating speed V2, printing can be rapidly performed on the recording medium W while rapidly increasing the adhesive force of the pressure-sensitive adhesive layer 11. The pressure-sensitive adhesive layer 11 obtains a sufficiently high adhesive force, that is, a high holding force of the recording medium W by heating. That is, even when the recording medium W is transported at a relatively fast speed, a favorable printing quality can be obtained without printing defects such as printing deviation caused by holding failure, transport failure, or the like.

A rotating speed ratio V1/V2 is not particularly limited, but is, for example, preferably 0.05 or more and 0.9 or less, more preferably 0.07 or more and 0.7 or less, and still more preferably 0.1 or more and 0.5 or less. By adjusting the rotating speed ratio V1/V2 to be in the above-described range, in the first mode, a pressure-sensitive adhesive layer 11 having favorable adhesive force and durability thereof can be easily and rapidly formed. On the other hand, in the second mode where the use frequency is high, while rapidly increasing the adhesive force of the pressure-sensitive adhesive layer 11, printing can be rapidly performed on the recording medium W with a favorable printing quality. In particular, by adjusting the rotating speed ratio V1/V2 to be the upper limit value or less, while sufficiently ensuring the transport speed of the transport belt 111 in the first mode, a period of time required for drying the coating film 13 can be reduced.

The rotating speed V1 of the transport belt 111 in the first mode varies depending on the water content of the coating film 13 and the heating temperature, and is, for example, preferably 0.1 m/min or more and 10 m/min or less, more preferably 0.5 m/min or more and 5 m/min or less, and still more preferably 1 m/min or more and 3 m/min or less. The rotating speed V2 of the transport belt 111 in the second mode varies depending on the heating temperature, and is, for example, preferably 2 m/min or more and 30 m/min or less, more preferably 5 m/min or more and 20 m/min or less, and even more preferably 8 m/min or more and 12 m/min or less.

The number of times the coating film 13 per unit area passes through a region above the heating unit 180 is the number of times N1 the transport belt 111 is circulated and rotated from the start to the end of the heating of the coating film 13 by the heating unit 180, which is plural in the present embodiment. The number of times the pressure-sensitive adhesive layer 11 per unit area passes through a region above the heating unit 180 is the number of times N2 the transport belt 111 is circulated and rotated until the recording medium W adheres from the start of heating of the pressure-sensitive adhesive layer 11 by the heating unit 180. In the present embodiment, while heating the pressure-sensitive adhesive layer 11 on the transport belt 111 that is being circulated and rotated, the transport belt 111 holds the uncoiled recording medium W. Therefore, the number of times N2 the transport belt 111 is circulated and rotated until the recording medium W adheres from the start of heating of the pressure-sensitive adhesive layer 11 by the heating unit 180 is one.

This way, in the present embodiment, the number of times N1 the transport belt 111 is circulated and rotated in the first mode is more than the number of times N2 the transport belt 111 is circulated and rotated in the second mode. Therefore, in the first mode where the pressure-sensitive adhesive layer 11 is formed, the coating film 13 can be sufficiently dried, and the pressure-sensitive adhesive layer 11 having favorable adhesive force and durability can be formed. On the other hand, in the second mode where the use frequency is high, while rapidly increasing the adhesive force of the pressure-sensitive adhesive layer 11, printing can be rapidly performed on the recording medium W.

The number of times N1 the transport belt 111 is circulated and rotated in the first mode varies depending on the water content of the non-dried coating film 13, the heating temperature, and the rotating speed V1, but is preferably 1 or more and 60 or less, more preferably 10 or more and 50 or less, and still more preferably 20 or more and 40 or less.

The heating conditions are not limited to the above description. For example, in the first mode and the second mode, the heating temperatures may be different, and the heating times may be the same. In addition, in the first mode and the second mode, both the heating temperatures and the heating times may be different. In particular, the heating conditions such as the heating temperatures, the rotating speeds V1 and V2, the rotating speed ratio V1/V2, the numbers of times N1 and N2, the total amounts of thermal energy H1 and H2, and the thermal energy ratio H1/H2 in the respective modes may be different from the above-described numerical values or numerical ranges.

The storage unit 192 stores operating conditions of each of the units relating to the heating conditions, for example, for each of the first mode and the second mode, and the operating conditions are executed as necessary. The operating conditions of each of the units relating to the heating conditions are not particularly limited, and examples thereof include the heating temperature, a set temperature of the heat source 182, the rotating speeds V1 and V2, the numbers of times N1 and N2 the motor 112c or the transport belt 111 is circulated, and the time in which the transport belt 111 is circulated and rotated. The control unit 191 can understand the rotation direction of the transport belt 111, the rotating speeds V1 and V2, the numbers of times N1 and N2, and the like based on the detected values (information) detected by the above-described rotation detection unit 115.

In addition, the storage unit 192 may store the total amounts of thermal energy H1 and H2 or the thermal energy ratio H1/H2, and the arithmetic processing unit 193 may be configured to calculate the heating temperature, the rotating speeds V1 and V2, the numbers of times N1 and N2, and the like in the respective modes based on these values. In this case, numerical values (parameters) relating to the heating conditions such as the heating temperatures, the rotating speeds V1 and V2, the rotating speed ratio V1/V2, the numbers of times N1 and N2, the total amounts of thermal energy H1 and H2, and the thermal energy ratio H1/H2 in the respective modes may be stored in the storage unit 192 in advance, or may be input through the operation unit 197 and stored in the storage unit 192. In addition, the numerical values stored in the storage unit 192 can be rewritten through the operation of the operation unit 197. In addition, by providing a thermo-hygrometer that can measure the temperature and the humidity of the atmosphere in the printing apparatus, the control unit may adjust the heating conditions during the heating of the coating film according to the temperature and the humidity measured by the thermo-hygrometer. As a result, when the temperature and the humidity of the atmosphere are high, the adjustment of the heating conditions such as an increase in the heating temperature can be performed. As a result, irrespective of the temperature and the humidity of the atmosphere of the printing apparatus, the pressure-sensitive adhesive layer having favorable adhesive force and durability can be stably and efficiently formed.

As described above, the printing apparatus 100 performs printing on the recording medium W while holding the recording medium W using the pressure-sensitive adhesive layer 11 formed of the aqueous pressure-sensitive adhesive containing water and a resin. The printing apparatus 100 includes the endless transport belt 111 configured to transport the recording medium W, the drive unit 112 configured to circulate and rotate the transport belt 111, the heating unit 180 provided around the transport belt 111, the printing unit 140 configured to perform printing on the recording medium W that is being transported by the transport belt 111, and the control unit 191 configured to control the operations of the drive unit 112, the heating unit 180, and the printing unit 140. The control unit 191 is selectable between the first mode and the second mode. In the first mode, the aqueous pressure-sensitive adhesive applied to the transport belt 111 is heated by the heating unit 180 to form the pressure-sensitive adhesive layer 11 at the transport belt 111 in a state where the transport belt 111 is being circulated and rotated without holding the recording medium W. In the second mode, the pressure-sensitive adhesive layer 11 is heated by the heating unit 180 and printing is performed by the printing unit 140 on the recording medium W held by the transport belt 111 in a state where the transport belt 111 is being circulated and rotated.

This way, by using the aqueous pressure-sensitive adhesive, the workload on the user can be reduced as compared to when a pressure-sensitive adhesive formed of an organic solvent is used. In addition, the heating unit 180 heats the aqueous pressure-sensitive adhesive applied to the transport belt 111 to promote the drying. Therefore, a period of time required for forming the pressure-sensitive adhesive layer 11 can be reduced as compared to when natural drying is performed. In addition, the heating unit 180 is used not only for drying the aqueous pressure-sensitive adhesive applied to the transport belt 111 but also for heating the pressure-sensitive adhesive layer 11 to increase the adhesive force. Therefore, the structure of the printing apparatus 100 can be simplified. That is, the printing apparatus 100 where a period of time required for forming the pressure-sensitive adhesive layer 11 can be reduced with the simple structure can be realized. Further, the heating unit 180 heats and dries the aqueous pressure-sensitive adhesive applied to the transport belt 111. Therefore, drying conditions of the aqueous pressure-sensitive adhesive can be stabilized. As a result, irrespective of the temperature and the humidity of the atmosphere of the printing apparatus 100, the pressure-sensitive adhesive layer 11 having favorable adhesive force and durability can be stably formed. As a result, the printing apparatus 100 can perform printing while appropriately transporting the recording medium W that is stably held. Therefore, printing defects such as printing deviation caused by holding failure, transport failure, or the like can be suppressed. As a result, the printing quality can be improved.

In addition, the heating condition of the aqueous pressure-sensitive adhesive in the first mode is different from the heating condition of the pressure-sensitive adhesive layer 11 in the second mode. Therefore, the heating unit 180 can be shared between the first mode and the second mode, and the heating condition suitable for each of the modes can be set.

In addition, the rotating speed of the transport belt 111 in the first mode is slower than the rotating speed of the transport belt 111 in the second mode. Therefore, in the first mode where the pressure-sensitive adhesive layer 11 is formed, the coating film 13 can be sufficiently dried at an appropriate drying speed, that is, can be sufficiently dried up to a desired degree, and the pressure-sensitive adhesive layer 11 having favorable adhesive force and durability can be formed. On the other hand, in the second mode where printing is performed on the recording medium W at a high use frequency, while rapidly increasing the adhesive force of the pressure-sensitive adhesive layer 11, printing can be rapidly performed.

In addition, the rotation direction of the transport belt 111 in the first mode is opposite to the rotation direction of the transport belt 111 in the second mode. As a result, a timing at which the application liquid 12 supplied to the transport belt 111 is heated by the heating unit 180 in the first mode and a timing at which the recording medium W adheres to the pressure-sensitive adhesive layer 11 heated by the heating unit 180 in the second mode are easily adjusted.

In addition, the heating unit 180 is in non-contact with the pressure-sensitive adhesive layer formation surface 111s of the transport belt 111. Therefore, damage or attachment of contamination to the pressure-sensitive adhesive layer 11 and the coating film 13 on the pressure-sensitive adhesive layer formation surface 111s can be suppressed.

The printing apparatus 100 further includes the application liquid supply unit 170 configured to apply the application liquid 12 of the aqueous pressure-sensitive adhesive to the pressure-sensitive adhesive layer formation surface 111s of the transport belt 111. As a result, the printing apparatus 100 can supply and apply the application liquid 12 using the application liquid supply unit 170 to the pressure-sensitive adhesive layer formation surface 111s of the transport belt 111. Therefore, the printing apparatus 100 can easily and stably form the coating film 13 and the pressure-sensitive adhesive layer 11, and can form the uniform and homogeneous pressure-sensitive adhesive layer 11 without unevenness in film thickness or characteristics. As a result, the printing apparatus 100 can perform printing while appropriately transporting the recording medium W that is stably and reliably held. Therefore, the printing quality can be improved.

In addition, the resin contains a (meth)acrylic resin. Since the pressure-sensitive adhesive layer 11 includes the resin, the adhesive force, stability, and durability of the pressure-sensitive adhesive layer 11 can be improved. In addition, the resin has excellent general versatility, is easily available, and is easy to handle. Thus, the adhesive force and the retention thereof can be widely set by selecting the chemical composition, the molecular weight, the glass transition temperature, and the like. For example, the pressure-sensitive adhesive layer 11 having a desired performance and characteristics corresponding to conditions such as the type or thickness of the recording medium W or printing conditions such as a printing speed can be easily designed.

In addition, the control method of the printing apparatus 100 is a control method of the printing apparatus 100 including the endless transport belt 111 configured to transport the recording medium W, the drive unit 112 configured to circulate and rotate the transport belt 111, the heating unit 180 provided around the transport belt 111, and the printing unit 140 configured to perform printing on the recording medium W that is being transported by the transport belt 111. The control method of the printing apparatus 100 includes a first step S1 of causing the heating unit 180 to heat the aqueous pressure-sensitive adhesive applied to the transport belt 111 to form the pressure-sensitive adhesive layer 11 at the transport belt 111 in a state where the transport belt 111 is being circulated and rotated without holding the recording medium W, and a second step S2 of causing the heating unit 180 to heat the pressure-sensitive adhesive layer 11 and causing the printing unit 140 to perform printing on the recording medium W held by the transport belt 111 in a state where the transport belt 111 is being circulated and rotated.

This way, by using the aqueous pressure-sensitive adhesive, the workload on the user can be reduced as compared to when a pressure-sensitive adhesive formed of an organic solvent is used. In addition, as in the effect of the printing apparatus 100, a period of time required for forming the pressure-sensitive adhesive layer 11 can be reduced with the printing apparatus 100 having the simple structure. Further, irrespective of the temperature and the humidity of the atmosphere of the printing apparatus 100, the pressure-sensitive adhesive layer 11 having favorable adhesive force and durability can be stably formed. As a result, the printing apparatus 100 can perform printing while appropriately transporting the recording medium W that is stably and reliably held in the second step S2. Therefore, the printing quality can be improved.

### Second Embodiment

Next, a printing apparatus 200 according to a second embodiment will be described.

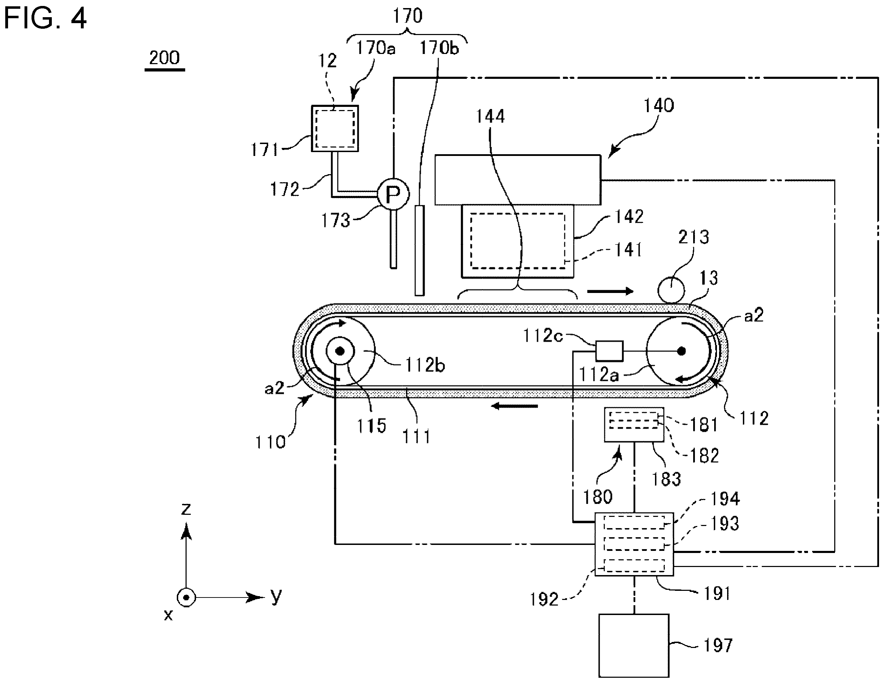

FIG. 4 is a diagram illustrating a state where the coating film 13 on the transport belt 111 of the printing apparatus 200 according to the present embodiment is heated.

In FIG. 4, the uncoiling device 120, the coiling device 130, the ink drying unit 150, and the cleaning unit 160 are not illustrated. In addition, in FIG. 4, the tensioner 114 is at a position away from the transport belt 111 but is not illustrated.

The printing apparatus 200 according to the present embodiment is different from the printing apparatus 100 according to the first embodiment, in that it includes an auxiliary heating unit 213 instead of the tensioner 113 of the printing apparatus 100 according to the first embodiment. Hereinafter, regarding the second embodiment, differences from the first embodiment will be mainly described, and the description regarding the same configurations as those of the first embodiment will be appropriately omitted.

The auxiliary heating unit 213 has a roller shape. In the auxiliary heating unit 213, a heat source (heater) is provided. That is, the auxiliary heating unit 213 is configured with a heating roller. The auxiliary heating unit 213 moves in the z-axis direction using a movement mechanism (not illustrated), and is configured to move toward and away from the transport belt 111. Examples of the movement mechanism include a drive source such as an air cylinder, an oil cylinder, or a solenoid. The heat source and the movement mechanism in the auxiliary heating unit 213 are electrically coupled to the control unit 191, and the operations thereof are controlled by the control unit 191.

In the second mode, as in the tensioner 113 in the first embodiment, a roller outer peripheral surface of the auxiliary heating unit 213 is disposed at a position in contact with the recording medium W, and the auxiliary heating unit 213 rotates along with the transport of the recording medium W. As a result, the auxiliary heating unit 213 exhibits the same function as that of the tensioner 113 illustrated in FIG. 1. That is, in the second mode, the recording medium W is interposed together with the transport belt 111 between the auxiliary heating unit 213 and the drive roller 112a, and the auxiliary heating unit 213 applies appropriate tension to the recording medium W. The auxiliary heating unit 213 may actively rotate or may be driven to rotate. At this time, power may be supplied to the heat source of the auxiliary heating unit 213, or the heat source in the auxiliary heating unit 213 may be in an inoperative state. When power is supplied to the heat source of the auxiliary heating unit 213, the auxiliary heating unit 213 can heat the pressure-sensitive adhesive layer 11 through the recording medium W. Therefore, the adhesive force of the pressure-sensitive adhesive layer 11 can be further increased.

In the first mode, the auxiliary heating unit 213 is moved from a standby position away from the transport belt 111 to a position where the roller outer peripheral surface of the auxiliary heating unit 213 is in contact with the coating film 13, power is supplied to the heat source in the auxiliary heating unit 213, and the auxiliary heating unit 213 secondarily heats and dries the coating film 13. At this time, the auxiliary heating unit 213 may rotate counterclockwise in FIG. 4 along with the transport of the coating film 13.

This way, the auxiliary heating unit 213 is used not only for secondarily or preliminarily heating the coating film 13 to assist (promote) the drying of the coating film 13 in the first mode but also for applying tension to the recording medium W to further optimize the transport of the recording medium W in the second mode. In addition, in the printing apparatus 200, the same effects as described in the printing apparatus 100 according to the first embodiment can be exhibited, the configuration of the printing apparatus 200 can be simplified, and while further reducing a period of time required for forming the pressure-sensitive adhesive layer 11, the pressure-sensitive adhesive layer 11 having favorable adhesive force and durability can be formed.

Next, a control method of the printing apparatus 200 will be described.

First, in the first mode, as in the first embodiment, while operating the drive unit 112 of the transport belt 111 to circulate and rotate the transport device 110, the control unit 191 operates the application liquid supply source 170a to supply the application liquid 12 of the aqueous pressure-sensitive adhesive to the transport belt 111. The application liquid 12 on the transport belt 111 is smoothed by the blade 170b to form the coating film 13 having a substantially uniform film thickness. The control unit 191 operates the heating unit 180 to heat the coating film 13. The control unit 191 moves the auxiliary heating unit 213 to the standby position away from the coating film 13 on the transport belt 111 before start of the supply of the application liquid 12 from the application liquid supply source 170a.

Next, the control unit 191 stops the supply of the application liquid 12 by the application liquid supply unit 170. At this time, subsequently, the drive unit 112 circulates and rotates the transport belt 111, and the heating unit 180 heats the coating film 13.

Next, as illustrated in FIG. 4, the control unit 191 operates the movement mechanism of the auxiliary heating unit 213 to bring the auxiliary heating unit 213 into contact with the coating film 13 on the transport belt 111, and operates the heating unit 180 and the auxiliary heating unit 213 to heat the coating film 13. By secondarily heating the coating film 13 using not only the heating unit 180 but also the auxiliary heating unit 213, the coating film 13 can be rapidly dried. Further, the auxiliary heating unit 213 comes into contact with and heats the coating film 13. Therefore, the coating film 13 can be efficiently and sufficiently dried. As a result, the pressure-sensitive adhesive layer 11 having favorable adhesive force and durability can be formed.

A timing at which the auxiliary heating unit 213 comes into contact with the coating film 13 on the transport belt 111 is not particularly limited and may be, for example, a timing at which the coating film 13 is dried to a certain degree by the heating unit 180 and, even when the auxiliary heating unit 213 is brought into contact with the coating film 13, the aqueous pressure-sensitive adhesive (aqueous pressure-sensitive adhesive composition) forming the coating film 13 is not attached to the auxiliary heating unit 213.

At the timing at which the auxiliary heating unit 213 comes into contact with the coating film 13 on the transport belt 111, the water content of the coating film 13 is preferably 0.1% by weight or more and 10% by weight or less, more preferably 0.5% by weight or more and 5% by weight or less, and still more preferably 1% by weight or more and 3% by weight or less. According to an investigation by the present inventors, it can be seen that, when water in the coating film 13 is evaporated until the water content of the coating film 13 is the upper limit value or less, attachment of the aqueous pressure-sensitive adhesive composition forming the coating film 13 to the auxiliary heating unit 213 can be suitably suppressed. In addition, by bringing the auxiliary heating unit 213 into contact with the coating film 13 until the water content of the coating film 13 is the lower limit value or more, the coating film 13 can be relatively rapidly dried.

In the second mode, while operating the drive unit 112 of the transport belt 111 to circulate and rotate the transport device 110, the control unit 191 operates the heating unit 180 to heat the pressure-sensitive adhesive layer 11. As a result, the adhesive force of the pressure-sensitive adhesive layer 11 can be increased, and the retention of the recording medium W can be improved. In addition, the control unit 191 operates the uncoiling device 120 to uncoil the recording medium W around the uncoiling roller 121. At this time, the control unit 191 operates the movement mechanism of the auxiliary heating unit 213 to bring the roller outer peripheral surface of the auxiliary heating unit 213 into contact with the recording medium W on the transport belt 111 and to apply appropriate tension to the recording medium W. The recording medium W uncoiled by the uncoiling device 120 comes into contact with the roller outer peripheral surface of the auxiliary heating unit 213 and adheres to the pressure-sensitive adhesive layer 11 on the transport belt 111. As a result, the transport belt 111 transports the recording medium W to the downstream in the transport direction while holding the recording medium W.

In addition, concurrently, the control unit 191 operates the printing unit 140 to perform printing when the recording medium W held by the transport belt 111 passes through the printing region 144. The control unit 191 operates the ink drying unit 150 to dry the ink attached to the printed recording medium W, and operates the coiling device 130 to coil the printed recording medium W around the coiling roller 131. This way, the auxiliary heating unit 213 applies appropriate tension to the recording medium W. Therefore, for example, the occurrence of wrinkles, sagging, or the like in the recording medium W that is being transported is reduced. As a result, when printing is performed on the recording medium W, the printing is performed appropriately with high quality.

As described above, the printing apparatus 200 further includes the auxiliary heating unit 213. In the first mode, the auxiliary heating unit 213 comes into contact with the aqueous pressure-sensitive adhesive applied to the transport belt 111 and heats the aqueous pressure-sensitive adhesive in conjunction with the heating unit 180. Therefore, the aqueous pressure-sensitive adhesive can be rapidly and sufficiently dried. As a result, the pressure-sensitive adhesive layer 11 having favorable adhesive force and durability of the adhesive force can be rapidly formed.

The printing apparatus 200 may include the auxiliary heating unit 213 instead of the tensioner 114 of the printing apparatus 100 according to the first embodiment. In addition, both of the tensioners 113 and 114 may be replaced with the auxiliary heating unit 213. In addition, in the operation unit 197, the user may select whether or not to use the auxiliary heating unit 213 in the second mode.

In addition, the configuration, the position, the function, and the usage method of the auxiliary heating unit are not limited to the above description. For example, the movement mechanism of the auxiliary heating unit can move the auxiliary heating unit along the transport direction of the recording medium. In addition, the auxiliary heating unit is not limited to a roller shape.

Above, the printing apparatus, and the control method of the printing apparatus according to the present disclosure were described with reference to each of the embodiments illustrated in the drawings, but the present disclosure is not limited thereto. In addition, each unit and each step of the printing apparatus and the control method of the printing apparatus can be replaced with any structure and step that can exhibit the same function. In addition, any structure or step may be added.

## Claims

1. A printing apparatus that performs printing on a recording medium while holding the recording medium using a pressure-sensitive adhesive layer formed of an aqueous pressure-sensitive adhesive containing water and a resin, the printing apparatus comprising:
an endless transport belt configured to transport the recording medium;
a drive unit configured to circulate and rotate the transport belt;
a heating unit provided around the transport belt;
a printing unit configured to perform printing on the recording medium that is being transported by the transport belt; and
a control unit configured to control operations of the drive unit, the heating unit, and the printing unit, wherein
the control unit is selectable between
a first mode where the aqueous pressure-sensitive adhesive applied to the transport belt is heated by the heating unit to form the pressure-sensitive adhesive layer at the transport belt in a state where the transport belt is being circulated and rotated without holding the recording medium, and
a second mode where the pressure-sensitive adhesive layer is heated by the heating unit and printing is performed by the printing unit on the recording medium held by the transport belt in a state where the transport belt is being circulated and rotated.

2. The printing apparatus according to claim 1, wherein
a heating condition of the aqueous pressure-sensitive adhesive in the first mode is different from a heating condition of the pressure-sensitive adhesive layer in the second mode.

3. The printing apparatus according to claim 2, wherein
a rotating speed of the transport belt in the first mode is slower than a rotating speed of the transport belt in the second mode.

4. The printing apparatus according to claim 1, wherein
a rotation direction of the transport belt in the first mode is opposite to a rotation direction of the transport belt in the second mode.

5. The printing apparatus according to claim 1, wherein
the heating unit is in non-contact with a pressure-sensitive adhesive layer formation surface of the transport belt.

6. The printing apparatus according to claim 5, further comprising:
an auxiliary heating unit, wherein
in the first mode, the auxiliary heating unit comes into contact with the aqueous pressure-sensitive adhesive applied to the transport belt and heats the aqueous pressure-sensitive adhesive in conjunction with the heating unit.

7. The printing apparatus according to claim 1, further comprising:
an application liquid supply unit configured to apply an application liquid of the aqueous pressure-sensitive adhesive to a pressure-sensitive adhesive layer formation surface of the transport belt.

8. The printing apparatus according to claim 1, wherein
the resin contains a (meth)acrylic resin.

9. A control method of a printing apparatus including
an endless transport belt configured to transport a recording medium,
a drive unit configured to circulate and rotate the transport belt,
a heating unit provided around the transport belt, and
a printing unit configured to perform printing on the recording medium that is being transported by the transport belt,
the control method comprising:
causing the heating unit to heat an aqueous pressure-sensitive adhesive applied to the transport belt to form a pressure-sensitive adhesive layer at the transport belt in a state where the transport belt is being circulated and rotated without holding the recording medium; and
causing the heating unit to heat the pressure-sensitive adhesive layer and causing the printing unit to perform printing on the recording medium held by the transport belt in a state where the transport belt is being circulated and rotated.
